# EUROPEAN PATENT APPLICATION

(11) **EP 4 807 047 A1**
(43) Date of publication of application: **16.09.2026**
(21) Application number: 24887627.8
(22) Date of filing: 12.09.2024
(51) Int. Cl.: C25B 11/089

(54) **IRIDIUM-BASED NANOWIRE AND PREPARATION METHOD THEREFOR, AND IRIDIUM-BASED CATALYST CONTAINING SAME AND PREPARATION METHOD THEREFOR**

(30) Priority: 09.11.2023 CN 202311493879
(71) Applicant: China Petroleum & Chemical Corporation, Beijing 100728 (CN); Sinopec (Shangai) Research Institute of Petrochemical Technology Co., Ltd., Shanghai 201208 (CN)
(72) Inventor: ZHANG, Tao, Shanghai 201208 (CN); CHEN, Haoshen, Shanghai 201208 (CN); TIAN, Hao, Shanghai 201208 (CN); TONG, Fengya, Shanghai 201208 (CN); WANG, Hao, Shanghai 201208 (CN); SONG, Lei, Shanghai 201208 (CN)
(74) Representative: karo IP
(86) International application number: PCT/CN2024/118395
(87) International publication number: WO 2025/098009

(57) **Abstract**

This invention discloses an iridium-based nanowire comprising a twin crystal composed of iridium and at least one transition metal selected from iron, cobalt, and nickel, preferably, the diameter d of the nanowire is 0.5 to 6 nm, and more preferably, the grain size of the twin crystal is (0.8-1.1)·d nm. This invention also relates to an iridium-based catalyst comprising the iridium-based nanowire and preparation methods of the iridium-based nanowire and the iridium-based catalyst. The catalyst of this invention has the advantages of large electrochemical active surface area, high catalytic activity for oxygen evolution reaction, and good stability.

## Description

### Technical Field

This invention belongs to the field of electrocatalysis, and specifically relates to an iridium-based nanowire, an iridium-based catalyst containing the iridium-based nanowire, and their preparation methods.

### Background Technology

Carbon dioxide electrolysis, by converting carbon dioxide into valuable chemicals and fuels, can effectively reduce greenhouse gas emissions, mitigate climate change, and promote the achievement of carbon neutrality goals. This technology converts electrical energy into chemical energy to facilitate energy storage and recycling, reduce dependence on fossil fuels, and provide an important solution for building a sustainable energy system.

Iridium catalysts are commonly used catalysts in the oxygen evolution reaction (OER) at the anode of carbon dioxide electrolysis, but the extremely low abundance of iridium in the Earth's crust limits their large-scale application. Alloying is a feasible method to further improve the efficiency of iridium catalysts and reduce the amount of precious metals required. Alloying can improve the stability and activity of the catalyst and reduce the amount of precious metals used to some extent.

Some progress has been made in iridium-based alloy catalysts. CN110453256B discloses a polyhedral cobalt-iridium nanoparticle catalyst prepared by electrochemical deposition; CN112475314A discloses an iridium-based nanowire prepared by a chemical synthesis method using a mixed solvent, with nanowire diameters ranging from 20 to 100 nm. The catalysts disclosed above exhibit better oxygen evolution reaction performance than iridium nanocatalysts. However, the above synthesis processes are generally not conducive to pilot and scale-up production. Nanowires with large particle size or large cross-section often have lower electrochemically active surface areas, and improvement in the catalyst performance is needed.

### Content of the Invention

An object of this invention is to provide an iridium-based catalyst, its preparation method, and use thereof, wherein the catalyst has the advantages of large electrochemically active surface area, high catalytic activity in oxygen evolution reaction, and good stability, and is suitable for oxygen evolution reaction under acidic conditions.

A first aspect of the present invention provides an iridium-based nanowire comprising a twin crystal composed of iridium and at least one transition metal selected from iron, cobalt and nickel, preferably, the diameter d of the nanowire is 0.5 to 6 nm, more preferably 0.5 to 5 nm, and even more preferably, the grain size of the twin crystal is (0.8-1.1).d nm.

A second aspect of this invention provides a preparation method of the iridium-based nanowire, comprising the steps of:
A1. a capping agent, an iridium source, and a crystal facet coordination agent are dissolved in a first alcohol to obtain an iridium source solution;
A2. a transition metal source is dissolved in a second alcohol to obtain a transition metal source solution;
A3. the solution from step A1 is mixed with the solution from step A2 to obtain a mixture;
A4. the mixture from step A3 undergoes a reaction under heating conditions to obtain iridium-based nanowires;
wherein, preferably, the crystal facet coordination agent comprises an inorganic iodide; and
wherein the capping agent is polyvinylpyrrolidone with a weight average molecular weight of 8,000 to 40,000.

A third aspect of the present invention provides an iridium-based catalyst comprising the iridium-based nanowire of the first aspect, which is located on a nitrogen-doped carbon material as a support.

A fourth aspect of this invention provides a preparation method of the above-mentioned iridium-based catalyst, comprising the following steps:
B1. the iridium-based nanowires according to the first aspect or the iridium-based nanowires obtained by the method according to the second aspect are provided;
B2. the iridium-based nanowires are mixed with a nitrogen-doped carbon material;
B3. the mixture obtained in step B2 is heat-treated,
to obtain an iridium-based catalyst with iridium-based nanowires as the active component and the nitrogen-doped carbon material as the support.

A fifth aspect of this invention is the use of the iridium-based nanowires or iridium-based catalysts described above in the oxygen evolution reaction.

The present invention has the following beneficial effects:
In the iridium-based catalyst of this invention, the active component is a twin crystal nanowire having a large electrochemical surface area. This active component not only significantly reduces the amount of the precious metal iridium used, but also exhibits excellent catalytic activity for oxygen evolution reaction and stability. In the twin crystal nanowire of this invention, iridium is enriched on the surface of the twin crystal nanowire, and at least part of the iridium on the surface is in an oxidized state, maximizing the catalytic efficiency of iridium. Furthermore, the preparation methods provided by this invention are simple, and have minimal environmental impact, and the iridium-based catalyst prepared thereby has uniform size, making it suitable for large-scale production.

Other features and advantages of this application will be described in detail in the following parts of description of the figures and the specific embodiments.

### Description of the Figures

The accompanying drawings are provided to further understand this application and form a part of the specification. They are used together with the following specific embodiments to explain this application, but do not constitute a limitation thereto.
Figure 1 shows a TEM image of the iridium-based nanowires, the active component of Example 1, and a diffraction image obtained by Fast Fourier Transform (FFT);
Figure 2 shows a high-resolution TEM image of the iridium-based nanowires, the active component of Example 1;
Figure 3 shows an X-ray diffraction pattern of the iridium-based nanowires, the active component of Example 1;
Figure 4 shows an XPS diagram of the Ir 4f region of the iridium-based catalyst of Example 1 before atmospheric heat treatment; the dashed line represents metallic iridium;
Figure 5 shows the XPS diagram of the Ir 4f region of the iridium-based catalyst of Example 1 after atmospheric heat treatment; the dashed line represents the metallic iridium;
Figure 6 shows a TEM image of the iridium-based nanowires, the active component of Comparative Example 2.

### Specific Embodiments

The specific embodiments of this application are described in detail below. It should be understood that the specific embodiments described herein are for illustration and explanation only and are not intended to limit this application.

Any specific numerical values disclosed herein (including the endpoints of numerical ranges) are not limited to their exact values, but should be understood to also include values close to the exact value, such as all possible values within ±5% of the exact value. Furthermore, with respect to the disclosed numerical ranges, one or more new numerical ranges can be obtained by arbitrary combinations between the endpoint values of the range, between the endpoint values and specific point values within the range, and between the specific point values themselves; these new numerical ranges should also be considered as specifically disclosed herein.

Unless otherwise stated, the terms used herein have the same meaning as commonly understood by those skilled in the art, and if a term is defined herein and its definition differs from the common understanding in the art, the definition herein shall prevail.

When a component, an element, or a layer is mentioned as being "on", "connected", "linked", or "coupled" to another component, element or layer, it may be directly on, connected to, linked to, or coupled to the other component, element, or layer, or there may be intermediate component, element or layer. Conversely, when an element is mentioned as being directly on, "directly connected to", "directly linked to", or "directly coupled" to another component or layer, there may be no intermediate element or layer. Other terms used to describe relationships between elements should be interpreted in a similar manner (e.g., "between" vs. "directly between", "adjacent" vs. "directly adjacent", etc.). As used herein, the term "and/or" includes any and all combinations of one or more of the related enumerations.

Any method steps, procedures, and operations described herein should not be construed as necessarily requiring them to be performed in the specific order discussed or shown, unless explicitly stated otherwise. It should also be understood that additional or alternative steps may be used unless otherwise stated.

Unless the context clearly indicates otherwise, the singular forms "a", "an", and "the" as used herein are intended to include the plural forms as well. The terms "comprising", "including", "containing", and "having" are inclusive and thus describe the presence of the stated feature, element, composition, step, integer, operation, and/or component, but do not exclude the presence or inclusion of one or more other features, integers, steps, operations, elements, components, and/or combinations thereof. Although the open-ended term "comprising" should be understood as a non-limiting term used to describe and claim the various embodiments described herein, in some aspects it may instead be understood as a more restrictive and limiting term, such as "consisting of" or "essentially composed of". Thus, for any given embodiment describing a composition, material, component, element, feature, integer, operation, and/or process step, this disclosure also particularly includes embodiments consisting of or substantially consisting of such composition, material, component, element, feature, integer, operation, and/or process step. In the case of "consisting of", the alternative embodiment excludes any additional composition, material, component, element, feature, integer, operation, and/or process step. In the case of "essentially composed of", any additional composition, material, component, element, feature, integer, operation, and/or process step that substantially affect the essential and novel characteristics are excluded from such embodiments. However, any composition, material, component, element, feature, integer, operation, and/or process step that do not substantially affect the essential and novel characteristics may be included in the embodiments.

In the context of this invention, a twin crystal means a non-parallel regular intergrowth composed of two or more identical crystals. A twin crystal is a symmetrical, intergrowth form between two or more adjacent crystals of the same mineral. At the microscopic level, the boundary of a twin crystal is characterized by two oriented grains sharing a common set of atomic positions in the crystal lattice.

In the context of this invention, a twin-crystal nanowire/catalyst refers to a nanowire/catalytic material having a twin crystal structure.

In the context of this invention, a crystal facet coordination agent is a reagent that achieves control over the morphology of nanocrystals through special coordination interactions.

In the context of this invention, an iridium source and a transition metal source are used as raw materials to provide iridium and the transition metal, respectively.

In the context of this invention, unless otherwise specified, percentages are weight percentages.

In the context of this invention, unless otherwise specified, pressure refers to absolute pressure.

Unless otherwise stated, the terms used herein have the same meaning as commonly understood by those skilled in the art, and if a term is defined herein and its definition differs from the common understanding in the art, the definition herein shall prevail.

### Iridium-based Nanowire

A first aspect of the present invention provides an iridium-based nanowire comprising a twin crystal composed of iridium and at least one transition metal selected from iron, cobalt and nickel, preferably, the diameter d of the nanowire is 0.5 to 6 nm, more preferably 0.5 to 5 nm, and even more preferably, the grain size of the twin crystal is (0.8-1.1)·d nm. The diameter d of the nanowire is, for example, 0.5 nm, 0.6 nm, 0.7 nm, 0.8 nm, 0.9 nm, 1 nm, 1.5 nm, 2 nm, 2.5 nm, 3 nm, 3.5 nm, 4 nm, 4.5 nm, 5 nm, 5.5 nm, and 6 nm. The grain size of the twin crystal is, for example, 0.8·d nm, 0.85·d nm, 0.9·d nm, 0.95·d nm, 1·d nm, 1.05·d nm, and 1.1·d nm. The grain size of the twin crystal is expressed as the product of a constant and the nanowire diameter; that is, for example, 0.8·d nm represents 0.8 times the nanowire diameter. In the case of d = 5 nm, this means that the grain size of the twin crystal is 4 nm.

Nanowires are wires at the nanoscale; in other words, nanowires are one-dimensional structures that are nanoscale in the transverse direction. There is no limit to the length of nanowires in the longitudinal direction.

When the nanowire diameter is less than 0.5 nm, the nanowire structure is unstable due to the small size of the grains of the twin crystal. When the nanowire diameter is greater than 6 nm, the electrochemical surface area of the material is small due to the reduction in geometric surface area.

According to some embodiments of the present invention, the twin crystal nanowires are dendritic in shape and are formed by oriented connections of nanocrystals. According to other embodiments of the present invention, the twin crystal nanowires are in linear or netlike shape.

Compared to conventional catalysts, the surface and interface properties of the catalyst containing twin crystal nanowire can be finely tuned. Special electronic structures are formed at the nanowire interfaces, and these structures can provide more active sites and thus increase catalytic activity. The twin crystal interfaces can alter the stress distribution of the catalyst at the nanoscale, helping to resist lattice distortion at high temperatures and improving the catalyst's thermal stability and durability.

Furthermore, the atomic ratio of iridium to the transition metals in the active component is 1:(0.1-5), preferably 1:(0.2-3).

Preferably, the atomic percentage concentration of iridium on the surface of the iridium-based nanowire is at least 1% higher than the atomic percentage concentration of iridium in the overall iridium-based nanowire, more preferably at least 2% higher, and more preferably at least 5% higher.

Preferably, the iridium in the oxidized state on the surface of the iridium-based nanowire accounts for at least 20 atomic %; more preferably at least 30 atomic %; and more preferably at least 40 atomic %; with all iridium atoms on the surface being 100%.

Although not construed as limiting the invention, it is believed that iridium and the transition metal form an alloy, such as an iridium-cobalt alloy, an iridium-nickel alloy, and an iridium-iron alloy, which further grows to form twin crystal nanowire.

### Preparation of Iridium-based Nanowires

A second aspect of this invention provides a preparation method of the iridium-based nanowire, comprising the following steps:
A1. a capping agent, an iridium source, and a crystal facet coordination agent are dissolved in a first alcohol to obtain an iridium source solution, preferably, the capping agent is dissolved in the first alcohol, and the iridium source and the crystal facet coordination agent are added thereto and dissolved to obtain the iridium source solution;
A2. a transition metal source is dissolved in a second alcohol to obtain a transition metal source solution;
A3. the solution from step A1 is mixed with the solution from step A2 to obtain a mixture;
A4. the mixture from step A3 undergoes reaction under heating conditions to obtain iridium-based nanowires.

Preferably, the crystal facet coordination agent comprises an inorganic iodide. According to a preferred embodiment, the crystal facet coordination agent is a mixture of the inorganic iodide and a quaternary ammonium bromide with a relative molecular weight of less than 360.

The capping agent plays a role in stabilizing nanoparticles in the growth of nanoparticles, reducing their surface energy and ensuring their stable existence. Preferably, the capping agent is polyvinylpyrrolidone (PVP) with a weight-average molecular weight of 8,000 to 40,000. More preferably, the capping agent is polyvinylpyrrolidone with a weight-average molecular weight of 8,000 to 60,000; more preferably, the weight-average molecular weight of the polyvinylpyrrolidone is 12,000 to 45,000; and even more preferably, the weight-average molecular weight of the polyvinylpyrrolidone is 15,000 to 30,000.

Furthermore, the iridium source is selected from soluble salts of iridium, preferably selected from at least one of iridium chloride, iridium acetylacetonate, iridium carbonyl, hexachloroiridic acid, sodium hexachloroiridate, ammonium hexachloroiridate and tetrairidium dodecacarbonyl, etc.

Furthermore, the transition metal source is selected from soluble salts of transition metals iron, cobalt, and nickel, and preferably selected from at least one of soluble chlorides, bromides, nitrates, sulfates, carbonates, acetates, and acetylacetone salts and the like of iron, cobalt, and nickel.

Further, the crystal facet coordination agent is a mixture of a crystal facet coordination agent "a" and a crystal facet coordination agent "b". The crystal facet coordination agent "a" is used to improve the crystallization degree of the nanocrystals, while the crystal facet coordination agent "b" is used to promote the oriented connection of the nanocrystals to form twin crystal nanowires. Preferably, the crystal facet coordination agent "a" is a quaternary ammonium bromide with a relative molecular weight of less than 360. Preferably, the crystal facet coordination agent "b" is an inorganic iodide.

More preferably, the quaternary ammonium bromide is selected from compounds with general formula of R4NBr, wherein the R, independently from each other, represents C1-C4 alkyl, aryl, or C1-C4 alkyl-substituted aryl, preferably selected from at least one of tetramethylammonium bromide, tetraethylammonium bromide, tetrapropylammonium bromide, tetrabutylammonium bromide, benzyltrimethylammonium bromide, and benzyltriethylammonium bromide, etc.

More preferably, the inorganic iodide is selected from at least one of alkali metal iodides (e.g., lithium iodide, sodium iodide, potassium iodide) or ammonium iodide.

Furthermore, the first alcohol and the second alcohol may be the same or different, preferably the same. The first alcohol and the second alcohol are, independently of each other, preferably polyols, preferably C2-C5 polyols, on another aspect, preferably dibasic alcohols and/or tribasic alcohols; more preferably, the polyol is selected from at least one of ethylene glycol, 1,2-propanediol, 1,3-propanediol, glycerol, diethylene glycol, triethylene glycol, etc.

Furthermore, the mixing sequence may be as follows: the capping agent is dissolved in the first alcohol, the iridium source and the crystal facet coordination agent are added in sequence until fully dissolved, and then the transition metal source dissolved in the second alcohol is added and stirred until fully mixed.

Further, the molar ratio of the iridium source, the transition metal source, and the crystal facet coordination agent is 1:(0.5-15):(5.1-32), preferably 1:(0.5-10):(5.1-32). Preferably, the molar ratio of the iridium source, the quaternary ammonium bromide in the crystal facet coordination agent and the inorganic iodide in the crystal facet coordination agent in step (1) is 1:(5-30):(0.1-1.2), preferably 1:(8-20):(0.3-1). When 1 mole of iridium source contains multiple moles of iridium, the number of moles of iridium shall be calculated. For example, in the case of tetrairidium dodecacarbonyl, 1 mole of tetrairidium dodecacarbonyl corresponds to 4 moles of iridium source. For example, in the case of octacarbonyldicobalt, 1 mole of octacarbonyldicobalt corresponds to 2 moles of cobalt source. The crystal facet coordination agent is calculated based on the sum of the moles of the crystal facet coordination agents used, that is, the sum of the moles of the crystal facet coordination agent "a" and the crystal facet coordination agent "b".

Further, the mass ratio of the iridium source (converted to the mass of hydrated iridium chloride of equimolar iridium), the capping agent and the alcohol is 1:(8-12):(1500-1800), preferably 1:(8-10):(1500-1800).

Further, the heating is preferably carried out in a sealed state, such as in an autoclave; optionally, a polyol solvothermal reaction is carried out under heating conditions; optionally, the heating temperature is 130-230 °C, preferably 160-190 °C; the heating time is 4-60 h, preferably 24-48 h. The pressure mentioned is generally the autogenous pressure generated by the reaction system under heating conditions. The pressure can be, for example, 0.8-1.5 bar (abs), preferably 1.0-1.2 bar (abs).

Furthermore, the iridium-based nanowires obtained after the heating reaction can be post-processed using conventional post-processing steps in the art (such as centrifugation, washing, drying, etc.) to obtain purified iridium-based nanowires. Wherein, the centrifugation step for example includes, but is not limited to, adding acetone to the product obtained after the heating reaction and centrifuging; the washing and drying steps for example include, but are not limited to, ultrasonically dispersing the black precipitate after centrifugation with ethanol, adding acetone, centrifuging and washing, repeating the above steps several times, and drying to obtain purified iridium-based nanowires.

Optionally, the method further includes:
A5. following step A4, the iridium-based nanowires are subjected to heat treatment.

Preferably, the heat treatment includes the following steps:
A5.1 under the protection of nitrogen and/or inert gas, the temperature is increased from room temperature to 80-120 °C at a heating rate of 5-10 °C/min, and held at this temperature for 0.5-1 h;
A5.2 with introducing an oxidizing atmosphere, the temperature is further increased to 200-350 °C at a heating rate of 2-5 °C/min, and the iridium-based nanowires are treated under the oxidizing atmosphere for 0.5-4 h; optionally, the oxygen content in the oxidizing atmosphere in step A5.2 is 5 vol%-20 vol%.

Surprisingly, in step B2.1, water and other small molecules adsorbed on the surface of the active component and the support are removed; in step B2.2, the composition of the active component is changed from a transition metal-enriched surface structure to an iridium-enriched surface structure, and the proportion of iridium atoms in high valence states on the surface is increased.

### Iridium-based Catalyst

A third aspect of the present invention provides an iridium-based catalyst comprising the iridium-based nanowire according the first aspect, wherein the iridium-based nanowires are located on a nitrogen-doped carbon material as a support.

The iridium-based nanowires, as active component, include iridium and at least one transition metal selected from iron, cobalt, and nickel; the support is a nitrogen-doped carbon material.

The carbon material is, for example, at least one selected from carbon black, graphene, carbon nanotube, activated carbon, and graphite. Further, the nitrogen-doped carbon material is at least one selected from nitrogen-doped carbon black, nitrogen-doped graphene, nitrogen-doped carbon nanotube, nitrogen-doped activated carbon, and nitrogen- doped graphite.

Further, the molar fraction of nitrogen in the nitrogen-doped carbon material is 0.5% to 5%, preferably 0.5% to 3%, for example 0.5%, 1%, 1.5%, 2%, 2.5%, 3%, 3.5%, 4%, 4.5% and 5%.

Further, based on parts by weight, the catalyst comprises 10-95 parts by weight of iridium-based nanowires as the active component and 5-90 parts by weight of nitrogen-doped carbon material as the support, preferably comprises 20-90 parts by weight of the active component and 10-80 parts by weight of nitrogen-doped carbon material as the support.

Furthermore, the electrochemical surface area of the catalyst is 36-78 cm², for example, it can be 40 cm², 45 cm², 50 cm², 55 cm², 60 cm², 65 cm², 70 cm², 75 cm², etc., but is not limited to the listed values; other unlisted values within this range are also applicable. The preferred electrochemical surface area of the catalyst is 38-78 cm².

### Preparation Method of the Iridium-based Catalyst

A fourth aspect of this invention provides a preparation method of the above-mentioned iridium-based catalyst, comprising the following steps:
B1. the iridium-based nanowires according to the first aspect or the iridium-based nanowires obtained by the method according to the second aspect are provided;
B2. the iridium-based nanowires are mixed with a nitrogen-doped carbon material;
B3. the mixture obtained in step B2 is heat-treated,
to obtain the iridium-based catalyst with the iridium-based nanowires as the active component and the nitrogen-doped carbon material as the support.

In the preparation method, the order of steps B2 and B3 can be exchanged, that is, the iridium-based nanowires can be heat-treated first, and the iridium-based nanowires can then be mixed with the nitrogen-doped carbon material.

Before heat treatment, the nanowires have a transition metal segregated surface composition. After heat treatment, the iridium atom content on the surface increases, and the transition metal atom content on the surface decreases, resulting in an iridium segregated surface composition, and the proportion of iridium atoms in the oxidized state on the surface increases. This heat treatment is also known as temperature-programmed annealing in specific atmosphere.

Further, in step B2, the nitrogen-doped carbon material is produced by nitrogen doping a carbon support with a nitrogen source through solid-phase or liquid-phase reaction, preferably by solid-phase doping. The specific steps of the solid-phase doping process are as follows: the carbon material and powders of the nitrogen source are thoroughly mixed, and heated under an oxidizing atmosphere to obtain powders of the nitrogen-doped carbon support. The mass ratio of the carbon support to powders of the nitrogen source is 1:0.2-5.

Furthermore, the nitrogen source in the nitrogen doping can be a conventional nitrogen source disclosed in the art, such as, but not limited to, at least one of urea, biuret, ammonium nitrate, ammonium bicarbonate, and melamine, etc.

Furthermore, the carbon material in the nitrogen-doped carbon material is at least one selected from carbon black, graphene, carbon nanotube, activated carbon, graphite and the like. Optionally, the carbon material may undergo oxidation pretreatment. Compared with conventional carbon materials, the nitrogen-doped carbon material is conducive to increase the anchoring effect between iridium-based nanowires and the support, thereby improving the stability of the catalyst.

Further, the atmosphere in the nitrogen-doping is an oxidizing atmosphere with an oxygen content of 5 vol% to 20 vol%. In the oxidizing atmosphere, besides oxygen, the remainder is at least one of nitrogen and/or an inert gas, wherein the inert gas is selected from at least one of argon, helium, etc. The heating temperature is 150 to 350 °C, preferably 200 to 350 °C, and the heating time is 0.5 to 6 hours, preferably 0.5 to 4 hours.

Further, in step B2, a dispersion containing the iridium-based nanowires from step B1 is first prepared, and then mixed with the nitrogen-doped carbon material. Optionally, the mixture is then ultrasonically treated, centrifuged, and dried to obtain a solid powder.

Further, the dispersion in step B2 is ethanol and/or isopropanol containing iridium-based nanowires, and the mass proportion of iridium-based nanowires in the iridium-based nanowire dispersion is 0.2% to 2%.

Furthermore, in step B2, the mass ratio of the iridium-based nanowires as the active component to the nitrogen-doped carbon material as the support is 10-95:5-90, preferably 20-90:10-80.

Furthermore, the ultrasonical treatment time in step B2 is 8-24 h; the drying temperature is 60-120 °C and the time is 4-12 h.

Furthermore, the heat treatment in step B3 includes the following steps:
B 3.1 under the protection of nitrogen and/or inert gas, the temperature is increased from room temperature to 80-120 °C at a heating rate of 5-10 °C/min, and held at this temperature for 0.5-1 h;
B3.2 with introducing an oxidizing atmosphere, the temperature is further increased to 200-350 °C at a heating rate of 2-5 °C/min, and the iridium-based nanowires are treated under the oxidizing atmosphere for 0.5-4 h.

Further, the oxygen content in the oxidizing atmosphere in step 3.2 is 5 vol%-20 vol%.

In step B3.1, water and other molecules adsorbed on the surface of the active component and the support are removed; in step B3.2, the composition of the active component changes from a transition metal-enriched surface to an iridium-enriched surface structure, and the proportion of iridium atoms in an oxidized state, i.e., in a higher valence state, on the surface increases.

Furthermore, the oxygen content in the oxidizing atmosphere in step B3.2 is 5 vol% to 20 vol%.

Furthermore, in the oxidizing atmosphere in step B3.2, apart from oxygen, the remainder is at least one of nitrogen and/or an inert gas, wherein the inert gas is selected from at least one of argon, helium, and neon.

### Use in Oxygen Evolution Reaction

A fifth aspect of this invention is use of the iridium-based nanowire or iridium-based catalyst described above in oxygen evolution reaction.

Furthermore, the iridium-based nanowire or iridium-based catalyst described above are preferably used in oxygen evolution reaction under acidic conditions.

Furthermore, the oxygen evolution reaction under acidic conditions can be an anodic oxygen evolution reaction in combination with any cathode reactions carried out by electrolysis of carbon dioxide under acidic conditions.

Furthermore, the acidic oxygen evolution reaction includes oxygen evolution reactions occurring on the surface of the polymer electrolyte membrane and in an acidic solution.

Furthermore, the polymer electrolyte membrane includes at least one of perfluorosulfonic acid proton exchange membrane, partially fluorinated polymer proton exchange membrane, non-fluorinated polymer proton exchange membrane, and composite membrane.

Furthermore, the acidic solution is selected from at least one of perchloric acid and sulfuric acid, and the concentration of the acidic solution is 0.01-2 mol/L.

Furthermore, the acidic solution is an oxygen-saturated acidic solution at 20-80°C.

It should be noted that the iridium-based nanowire or iridium-based catalyst of the present invention is not limited to the oxygen evolution reaction described above. They can also be used in, for example, automotive exhaust purification, electrochemistry, petroleum refining, environmental protection and the like.

The contents of present invention include the following aspects
1. An iridium-based catalyst, said catalyst comprising an active component and a support;
   wherein the active component is a twin crystal nanowire comprising iridium and at least one transition metal selected from iron, cobalt, and nickel; the diameter d of the nanowire is 0.5 to 6 nm, and the grain size of the twin crystal, which constitutes the nanowire, is (0.8-1.1)·d nm.
2. The iridium-based catalyst according to aspect 1, wherein the support is a nitrogen-doped carbon material.
3. The iridium-based catalyst according to aspect 2, based on parts by weight, the catalyst comprises 10 to 95 parts by weight of the active component and 5 to 90 parts by weight of nitrogen-doped carbon material as the support; optionally, the atomic ratio of iridium to the transition metal in the active component is 1:(0.1-5).
4. The iridium-based catalyst according to aspect 1, the nitrogen-doped carbon material is selected from at least one of nitrogen-doped carbon black, nitrogen-doped graphene, and nitrogen-doped carbon nanotube; optionally, the molar fraction of nitrogen in the nitrogen-doped carbon material is 0.5% to 5%.
5. The iridium-based catalyst according to aspect 1, wherein the electrochemical surface area of the catalyst is 36-78 cm².
6. A preparation method of the iridium-based catalyst according to any one of aspects 1-5, comprising the following steps:
   (1) an iridium source, a transition metal source, a capping agent, a crystal facet coordination agent and an organic alcohol are mixed in a certain order and heated to react to obtain an iridium-based nanowire active component;
   (2) the iridium-based nanowire active component is mixed with a nitrogen-doped carbon material and then subjected to a temperature-programmed annealing in specific atmosphere to obtain the iridium-based catalyst.
7. The preparation method according to aspect 6, wherein the mixing in a certain order in step (1) is: the capping agent is dissolved in an organic alcohol, the iridium source and the crystal facet coordination agent are added in sequence until fully dissolved, and then the transition metal source dissolved in the organic alcohol is added and stirred until fully mixed;
   the iridium source in step (1) is selected from at least one of iridium chloride, iridium acetylacetonate, iridium carbonyl, hexachloroiridic acid, sodium hexachloroiridate, and ammonium hexachloroiridate; optionally, the transition metal source in step (1) is selected from at least one of the soluble chlorides, bromides, nitrates, sulfates, carbonates, acetates, and acetylacetonates salts of the transition metals iron, cobalt, and nickel.
8. The preparation method according to aspect 6, wherein the crystal facet coordination agent in step (1) is a mixture of an organic quaternary ammonium bromide salt with a relative molecular weight of less than 360 and an inorganic iodide; optionally, the capping agent in step (1) is polyvinylpyrrolidone with a weight average molecular weight of 8000-40000; optionally, the organic alcohol in step (1) is preferably a polyol.
9. The preparation method according to aspect 6, wherein the molar ratio of the iridium source, the transition metal source, and the crystal facet coordination agent in step (1) is 1:(0.5-15):(5.1-32), preferably 1:(0.5-10):(5.1-32).
10. The preparation method according to aspect 8, wherein the molar ratio of the iridium source, the organic quaternary ammonium bromide salt in the crystal facet coordination agent and the inorganic iodide in the crystal facet coordination agent in step (1) is 1:(5-30):(0.1-1.2).
11. The preparation method according to aspect 6, wherein the mass ratio of the iridium source, based on hydrated iridium chloride, the capping agent and the organic alcohol in step (1) is 1:(8-12):(1500-1800).
12. The preparation method according to aspect 6, wherein the heating temperature in step (1) is 130-230 °C; the heating time is 4-60 h; and the pressure is 0.8-1.5 bar.
13. The preparation method according to aspect 6, wherein the carbon support in the nitrogen-doped carbon material in step (2) is at least one of carbon black, graphene, carbon nanotubes, and activated carbon; optionally, the mass ratio of the iridium-based nanowire active component to the nitrogen-doped carbon support in step (2) is 10-95:5-90.
14. The preparation method according to aspect 6, wherein the temperature-programmed annealing in step (2) includes the following steps:
   (1) under the protection of nitrogen and/or inert gas, the temperature is increased from room temperature to 80-120 °C at a heating rate of 5-10 °C/min, and held at this temperature for 0.5-1 h;
   (2) with introducing an oxidizing atmosphere, the temperature is further increased to 200-350 °C at a heating rate of 2-5 °C/min, and the mixture is treated under the oxidizing atmosphere for 0.5-4 h; optionally, the oxygen content in the oxidizing atmosphere in step (2) is 5 vol%-20 vol% oxygen.
15. Use of the iridium-based catalyst according to any one of aspects 1-6 in oxygen evolution reaction under acidic conditions.

### Examples

The technical solutions provided by the present invention will be illustrated by the following examples, but the scope of protection of the present invention is not limited thereto.

In the following examples, a three-electrode system was tested in a 0.5 mol·L⁻¹ sulfuric acid solution saturated with oxygen at 25 °C. The system used an Ag/AgCl electrode as the reference electrode, a platinum sheet electrode as the counter electrode, and a rotating disk electrode at 1600 rpm rotating speed as the working electrode. A catalyst and a perfluorosulfonic acid-based polymer Nafion solution were dispersed in water/ethanol/isopropanol and ultrasonically dispersed to obtain a catalyst slurry. The catalyst slurry was then dropped onto the surface of the rotating disk electrode and dried to obtain a thin-film electrode. An oxygen evolution reaction current at a reaction overpotential of 0.25 V was used as a reference to compare the oxygen evolution reaction activity of the catalysts. The time of the catalyst to operate stably at a current density of 10 mA·cm⁻² was used as the evaluation criterion for catalyst stability.

The electrochemically active surface area of the catalyst was obtained through measuring the electrochemical (double-layer) capacitance in solution, wherein the electrochemical capacitance was determined by the non-Faradaic capacitive current during the double-layer charging process under cyclic voltammetry scans at different scan rates. The electrochemically active surface area of the catalyst was the ratio of the electrochemical capacitance to the characteristic capacitance of the electrolyte. In a 0.5 mol·L⁻¹ H₂SO₄ solution, the characteristic capacitance of the electrolyte was 0.035 mF·cm⁻². The specific activity of the catalyst was calculated based on the unit electrochemically active surface area and the oxygen evolution reaction current at a reaction overpotential of 0.25 V, according to the following formula: $A = \frac{{I}_{0.25 V}}{ECSA}$ wherein A represents the specific activity of the catalyst, I_{0.25V} represents the oxygen evolution reaction current measured at a reaction overpotential of 0.25 V in the aforementioned three-electrode system, and ECSA represents the unit electrochemical active surface area.

A carbon dioxide electrolysis test was conducted using a membrane electrode (MEA) electrolytic cell with a double-layer membrane. The proton exchange membrane was a Nafion^{®} N117 membrane from the Chemours Company, USA, and the anion exchange membrane was a Sustainion^{®} X37-50 membrane from Dioxide Materials, USA. The electrolyte was deionized water, the temperature was 80 °C, and the current density was 0.5 A/cm².

In this invention, the diameter of the nanowire was measured using transmission electron microscopy (TEM) images with the TEM accelerating voltage of 200-300 kV, and the magnification of 200-1500 k×. The length perpendicular to the nanowire axis in the TEM images was measured using Nano Measurer software. 200 measurements at different locations were statistically analyzed, and the average and standard deviation were calculated to obtain the nanowire diameter. The grain size of the twin crystal constituting the nanowire was calculated from powder X-ray diffraction (XRD) results using the Scherrer formula. The incident Cu *K_{α}* X-ray wavelength was 1.5406 Å, the slit width was 1/2°, and the *2θ* scan rate was 4°·min⁻¹. The elemental composition of the nanowire surface and the valence state of iridium element were obtained using X-ray photoelectron spectroscopy (XPS) with a monochromatic Al *K_{α}* X*-*ray source. The elemental binding energy was calibrated using the C 1s line at 284.6 eV.

### Example 1

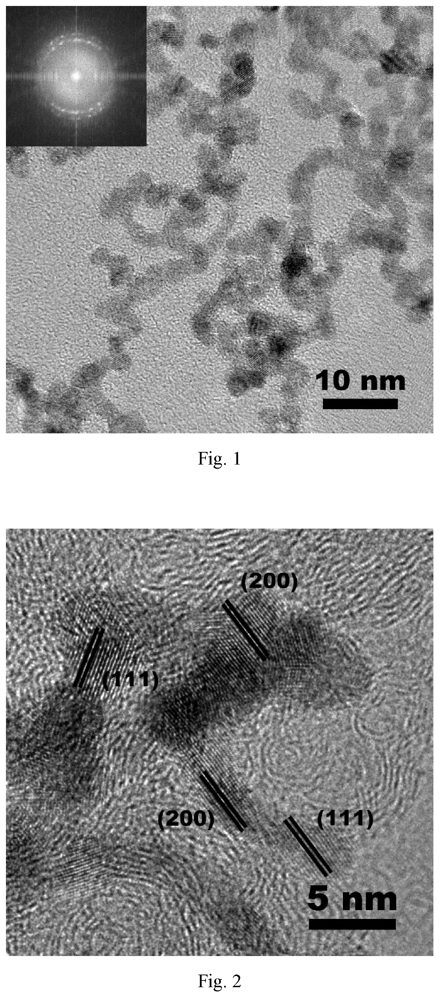

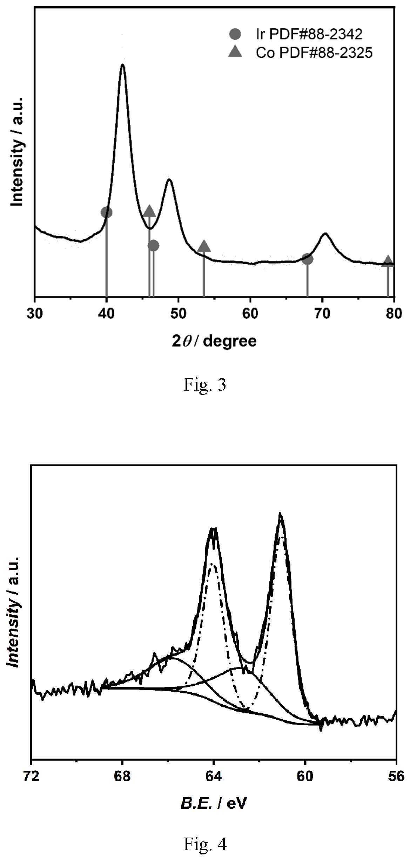

2.5 g of polyvinylpyrrolidone (PVP) with a weight average molecular weight of 29,000 was dissolved in 350 g of ethylene glycol. Then, 1 mmol of hydrated iridium chloride, 12 mmol of tetraethylammonium bromide, and 0.5 mmol of potassium iodide were added, and the mixture was stirred for 0.5 h to obtain a clear solution A1. 2 mmol of cobalt chloride hexahydrate (iridium source to cobalt source molar ratio of 1:2) was dissolved in 125 g of ethylene glycol to obtain solution B1. Solution B1 was added to A1 and stirred until fully mixed. This mixture was then added to an 800 mL hydrothermal reactor and reacted at 190 °C and 1 bar for 48 h. The resulting product was centrifuged with acetone, and the resulting black precipitate was dispersed ultrasonically in ethanol, centrifugally washed with acetone. This process was repeated several times, and the purified iridium-cobalt nanowires were obtained after drying. The ratio of iridium atoms to cobalt atoms was 1:0.6. A TEM image of the iridium-cobalt nanowires is shown in Figure 1. Figure 1 shows that the nanowires have a narrow size distribution, and distinct diffraction rings appear in the fast Fourier transform diffraction pattern, indicating that the nanowires have a twin crystal structure. The nanowire diameter d was 3.5±0.3 nm, and the grain size of the twin crystal constituting the nanowire was 3.4 nm. The high-resolution TEM image in Figure 2 shows that the nanowires mainly expose the (111) and (200) planes. The XRD pattern of the iridium-cobalt nanowires is shown in Figure 3. In Figure 3, the diffraction peaks of the iridium-cobalt nanowires are located between metallic iridium and cobalt, and no impurity peaks are observed, indicating that the nanowires have an alloy structure.

The steps for obtaining nitrogen-doped graphene were as follows: 1 g of graphene oxide and 4 g of urea were thoroughly ground and mixed, heated at 250 °C for 2 hours in an oxidizing atmosphere containing 10 vol% oxygen and 90 vol% helium, and then cooled to obtain nitrogen-doped graphene powder.

46 mg of the iridium-cobalt nanowires were dispersed in 50 mL of ethanol, and 85 mg of the nitrogen-doped graphene was added. The mixture was ultrasonically treated for 12 h, and centrifuged to obtain a black precipitate. The precipitate was dried in an oven at 80 °C for 8 h to obtain a black solid powder. The solid powder was heated from room temperature to 100 °C at a heating rate of 5 °C/min under a helium atmosphere and held at this temperature for 1 h. Then, an oxidizing atmosphere containing 10 vol% oxygen and 90 vol% helium was introduced, and the temperature was further increased to 250 °C at a heating rate of 5 °C/min. The mixture was treated under the oxidizing atmosphere for 2.5 h to obtain the supported iridium-cobalt nanowire catalyst.

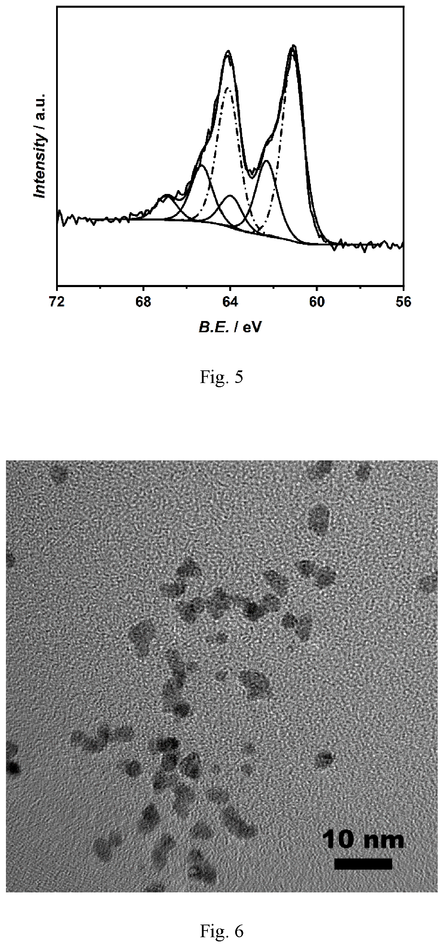

The iridium-cobalt nanowires were tested for surface composition by XPS. The XPS diagram of the iridium-cobalt nanowires before supporting is shown in Figure 4. Before supporting, iridium atoms accounted for 57% of the total metal atoms on the surface, and the proportion of oxidized iridium on the surface was 36%. The XPS diagram of the iridium-cobalt nanowires after supporting is shown in Figure 5. After supporting, iridium atoms accounted for 63% of the total metal atoms (iridium and cobalt) on the surface, and the atomic proportion of oxidized iridium on the surface was 49%.

In the three-electrode system using an Ag/AgCl electrode as the reference electrode, a platinum sheet electrode as the counter electrode, and a rotating disk electrode at 1600 rpm as the working electrode in 0.5 mol^{·}L⁻¹ sulfuric acid solution saturated with oxygen at 25 °C, the catalyst exhibited an electrochemically active surface area of 54.4 cm², a specific activity of 113.0 µA/cm², and stable operation for 32 h at a current density of 10 mA·cm⁻², at a reaction overpotential of 0.25 V.

8 mg of the iridium-cobalt nanowire catalyst was ultrasonically dispersed in a mixed solvent of 2.6 mL isopropanol, 1.2 mL ethanol, and 0.2 mL water until homogeneous. This dispersion was then uniformly sprayed onto the hydrophilic side of a 4 cm² SGL 28BC carbon paper using a spray gun, with a metal loading of 2 mg/cm², serving as the anode gas diffusion electrode (GDE) for carbon dioxide electrolysis. 4 mg of 80 % silver catalyst (from Fuel Cell Store, USA) was ultrasonically dispersed in a mixed solvent of 3.2 mL isopropanol, 0.6 mL ethanol, and 0.2 mL water until homogeneous. This dispersion was then uniformly sprayed onto the hydrophilic side of a 4 cm² SGL 28BC carbon paper using a spray gun, with a metal loading of 1 mg/cm², serving as the cathode GDE for carbon dioxide electrolysis. The electrolysis voltage in the MEA electrolytic cell under constant current mode was 2.4 V.

### Example 2

3.5 g of polyvinylpyrrolidone (PVP) with a weight average molecular weight of 25,000 was dissolved in 350 g of ethylene glycol. Then, 1 mmol of iridium acetylacetone, 5 mmol of tetramethylammonium bromide, and 0.3 mmol of sodium iodide were added, and the mixture was stirred for 0.5 h to obtain a clear solution A2. 4 mmol of ferrous sulfate heptahydrate (iridium source to iron source molar ratio of 1:4) was dissolved in 150 g of ethylene glycol to obtain solution B2. Solution B2 was added to solution A2 and stirred until fully mixed. This mixture was then added to an 800 mL hydrothermal reactor and reacted at 180 °C and 0.8 bar for 36 h. The resulting product was centrifugally washed with acetone, and the resulting black precipitate was dispersed ultrasonically in ethanol, which was then washed with acetone and centrifuged. This process was repeated several times, and the purified iridium-iron nanowires were obtained after drying. The ratio of iridium atoms to iron atoms was 1:1.2. The TEM image of the iridium-iron nanowires was similar to that in Figure 1, showing a narrow size distribution of the nanowires, and distinct diffraction rings in the fast Fourier transform diffraction pattern, indicating that the nanowires have a twin crystal structure. The nanowire diameter d was 3.7±0.3 nm, and the grain size of the twin crystal constituting the nanowire was 3.5 nm.

The steps for obtaining nitrogen-doped graphene were as follows: 1 g of graphene oxide and 3 g of melamine were thoroughly ground and mixed, heated at 350 °C for 4 hours in an oxidizing atmosphere containing 20 vol% oxygen and 80 vol% helium, and then cooled to obtain nitrogen-doped graphene powder.

57 mg of the iridium-iron nanowires were dispersed in 50 mL of isopropanol, and 85 mg of the nitrogen-doped graphene was added. The mixture was ultrasonically treated for 10 h, and centrifuged to obtain a black precipitate. The precipitate was dried in an oven at 70 °C for 6 h to obtain a black solid powder. The solid powder was heated from room temperature to 80 °C at a heating rate of 6 °C/min under an argon atmosphere and held at this temperature for 0.9 h. Then, an oxidizing atmosphere containing 15 vol% oxygen and 85 vol% nitrogen was introduced, and the temperature was further increased to 220 °C at a heating rate of 4 °C/min. The mixture was treated under the oxidizing atmosphere for 1.5 h to obtain the iridium-iron nanowire catalyst.

In the three-electrode system using an Ag/AgCl electrode as the reference electrode, a platinum sheet electrode as the counter electrode, and a rotating disk electrode at 1600 rpm as the working electrode in 0.5 mol^{·}L⁻¹ sulfuric acid solution saturated with oxygen at 25 °C, the catalyst exhibited an electrochemically active surface area of 51.4 cm², a specific activity of 125.4 µA/cm², and stable operation for 25 h at a current density of 10 mA·cm⁻², at a reaction overpotential of 0.25 V.

### Example 3

3 g of polyvinylpyrrolidone (PVP) with a weight average molecular weight of 55,000 was dissolved in 375 g of glycerol. Then, 0.25 mmol of tetrairidium dodecacarbonyl, 8 mmol of tetraethylammonium bromide, and 0.1 mmol of ammonium iodide were added, and the mixture was stirred for 0.5 h to obtain a clear solution A3. 0.5 mmol of hydrated nickel bromide (iridium source to nickel source molar ratio of 1:0.5, the molar number of iridium source calculated based on the molar number of iridium) was dissolved in 150 g of glycerol to obtain solution B3. Solution B3 was added to solution A3 and stirred until fully mixed. This mixture was then added to an 800 mL hydrothermal reactor and reacted at 170 °C and 0.9 bar for 30 h. The resulting product was added to acetone and centrifuged, and the resulting black precipitate was dispersed ultrasonically with ethanol, centrifugally washed with acetone. This process was repeated several times, and the purified iridium-nickel nanowires were obtained after drying. The ratio of iridium atoms to nickel atoms was 1:0.2. The TEM image of the iridium-nickel nanowires is similar to that in Figure 1, showing a narrow size distribution of the nanowires and distinct diffraction rings in the fast Fourier transform diffraction pattern, indicating that the nanowires have a twin crystal structure. The nanowire diameter d was 1.4±0.2 nm, and the grain size of the twin crystal constituting the nanowire was 1.2 nm.

The steps for obtaining nitrogen-doping carbon nanotubes were as follows: 1 g of oxidized carbon nanotubes and 2 g of ammonium bicarbonate were thoroughly ground and mixed, heated at 320 °C for 3 h in an oxidizing atmosphere containing 20 vol% oxygen and 80 vol% helium, and then cooled to obtain nitrogen-doped carbon nanotube powder.

21 mg of the iridium-nickel nanowires were dispersed in 50 mL of isopropanol, and 85 mg of nitrogen-doped carbon nanotubes were added. The mixture was ultrasonically treated for 20 h, and centrifuged to obtain a black precipitate. The precipitate was dried in an oven at 120 °C for 12 h to obtain a black solid powder. The solid powder was heated from room temperature to 110 °C at a heating rate of 7 °C/min under a nitrogen atmosphere and held at this temperature for 0.5 h. Then, an oxidizing atmosphere containing 20 vol% oxygen and 80 vol% argon was introduced, and the temperature was further increased to 240 °C at a heating rate of 3 °C/min. The mixture was treated under the oxidizing atmosphere for 2 h to obtain the iridium-nickel nanowire catalyst.

In the three-electrode system using an Ag/AgCl electrode as the reference electrode, a platinum sheet electrode as the counter electrode, and a rotating disk electrode at 1600 rpm as the working electrode in 0.5 mol^{·}L⁻¹ sulfuric acid solution saturated with oxygen at 25 °C, the catalyst exhibited an electrochemically active surface area of 67.1 cm², a specific activity of 97.1 µA/cm², and stable operation for 29 h at a current density of 10 mA·cm⁻², at a reaction overpotential of 0.25 V.

### Example 4

3 g of polyvinylpyrrolidone (PVP) with a weight average molecular weight of 15000 was dissolved in 350 g of glycerol. Then, 1 mmol of iridium acetylacetone, 15 mmol of tetrabutylammonium bromide, and 0.7 mmol of potassium iodide were added, and the mixture was stirred for 0.5 h to obtain a clear solution A4. 1 mmol of basic nickel carbonate (iridium source to nickel source molar ratio of 1:1) was dissolved in 200 g of glycerol to obtain solution B4. Solution B4 was added to solution A4 and stirred until fully mixed. This mixture was then added to an 800 mL hydrothermal reactor and reacted at 160 °C and 1.1 bar for 24 h. The resulting product was added to acetone and centrifuged, and the resulting black precipitate was dispersed ultrasonically with ethanol, centrifugally washed with acetone. This process was repeated several times, and the purified iridium-nickel nanowires were obtained after drying. The ratio of iridium atoms to nickel atoms was 1:0.3. The TEM image of the iridium-nickel nanowires was similar to that in Figure 1, showing a narrow size distribution and distinct diffraction rings in the fast Fourier transform diffraction pattern, indicating that the nanowires have a twin crystal structure. The nanowire diameter d was 2.2±0.2 nm, and the grain size of the twin crystal constituting the nanowire was 2.2 nm.

The steps for nitrogen-doping carbon black were as follows: 1 g of carbon black and 1 g of biuret were thoroughly ground and mixed, heated at 300 °C for 2 hours in an oxidizing atmosphere containing 15 vol% oxygen and 85 vol% helium, and then cooled to obtain nitrogen-doped carbon black powder.

26 mg of the iridium-nickel nanowires were dispersed in 50 mL of ethanol, and 85 mg of nitrogen-doped carbon black was added. The mixture was ultrasonically treated for 15 h, and centrifuged to obtain a black precipitate. The precipitate was dried in an oven at 100 °C for 10 h to obtain a black solid powder. The solid powder was heated from room temperature to 90 °C at a heating rate of 8 °C/min under a helium atmosphere and held at this temperature for 0.8 h. Then, an oxidizing atmosphere containing 10 vol% oxygen and 90 vol% argon was introduced, and the temperature was further increased to 300 °C at a heating rate of 2 °C/min. The mixture was treated under the oxidizing atmosphere for 4 h to obtain the iridium-nickel nanowire catalyst.

In the three-electrode system using an Ag/AgCl electrode as the reference electrode, a platinum sheet electrode as the counter electrode, and a rotating disk electrode at 1600 rpm as the working electrode in 0.5 mol^{·}L⁻¹ sulfuric acid solution saturated with oxygen at 25 °C, the catalyst exhibited an electrochemically active surface area of 60.5 cm², a specific activity of 102.9 µA/cm², and stable operation for 37 h at a current density of 10 mA·cm⁻², at a reaction overpotential of 0.25 V.

### Example 5

3.8 g of polyvinylpyrrolidone (PVP) with a weight average molecular weight of 20,000 was dissolved in 400 g of 1,2-propanediol. Then, 1 mmol of hydrated iridium chloride, 20 mmol of tetramethylammonium bromide, and 0.9 mmol of sodium iodide were added, and the mixture was stirred for 0.5 h to obtain a clear solution A5. 10 mmol of ferric acetylacetone (iridium source to iron source molar ratio of 1:10) was dissolved in 160 g of 1,2-propanediol to obtain solution B5. Solution B5 was added to solution A5 and stirred until fully mixed. This mixture was then transferred to an 800 mL hydrothermal reactor and reacted at 170 °C and 1 bar for 36 h. The resulting product was added to acetone and centrifuged, and the resulting black precipitate was dispersed ultrasonically with ethanol, centrifugally washed with acetone, and the above steps were repeated several times. The purified iridium-iron nanowires were obtained by drying. The ratio of iridium atoms to iron atoms was 1:3. The TEM image of the iridium-iron nanowire was similar to that in Figure 1, showing a narrow size distribution and distinct diffraction rings in the fast Fourier transform diffraction pattern, indicating that the nanowires have a twin crystal structure. The nanowire diameter d was 4.6±0.5 nm, and the grain size of the twin crystal constituting the nanowire was 4.9 nm.

The steps for nitrogen-doping carbon black were as follows: 1 g of carbon black and 0.5 g of biuret were thoroughly ground and mixed, heated at 200 °C for 0.5 h in an oxidizing atmosphere containing 5 vol% oxygen and 95 vol% helium, and then cooled to obtain nitrogen-doped carbon black powder.

340 mg of iridium-iron nanowires were dispersed in 50 mL of ethanol, and 85 mg of nitrogen-doped carbon black was added. The mixture was ultrasonically treated for 18 h, and centrifuged to obtain a black precipitate. The precipitate was dried in an oven at 110 °C for 10 h to obtain a black solid powder. The solid powder was heated from room temperature to 100 °C at a heating rate of 9 °C/min under an argon atmosphere and held at this temperature for 0.7 h. Then, an oxidizing atmosphere containing 15 vol% oxygen and 85 vol% helium was introduced, and the temperature was further increased to 270 °C at a heating rate of 3 °C/min. The mixture was treated under the oxidizing atmosphere for 3 h to obtain the iridium-iron nanowire catalyst.

In the three-electrode system using an Ag/AgCl electrode as the reference electrode, a platinum sheet electrode as the counter electrode, and a rotating disk electrode at 1600 rpm as the working electrode in 0.5 mol·L⁻¹ sulfuric acid solution saturated with oxygen at 25 °C, the catalyst exhibited an electrochemically active surface area of 42.7 cm², a specific activity of 109.6 µA/cm², and stable operation for 41 h at a current density of 10 mA·cm⁻², at a reaction overpotential of 0.25 V.

### Example 6

2.75 g of polyvinylpyrrolidone (PVP) with a weight average molecular weight of 25,000 was dissolved in 400 g of 1,2-propanediol. Then, 1 mmol of iridium acetylacetone, 30 mmol of tetrabutylammonium bromide, and 1.1 mmol of ammonium iodide were added, and the mixture was stirred for 0.5 h to obtain a clear solution A6. 3 mmol of cobalt octacarbonyl (iridium source to cobalt source molar ratio of 1:6, cobalt source calculated as the molar number of cobalt) was dissolved in 170 g of 1,2-propanediol to obtain solution B6. Solution B6 was added to solution A6 and stirred until fully mixed. This mixture was then transferred to an 800 mL hydrothermal reactor and reacted at 180 °C and 1 bar for 30 h. The resulting product was added to acetone and centrifuged, and the resulting black precipitate was dispersed ultrasonically with ethanol, centrifugally washed with acetone, and the above steps were repeated several times. The mixture was then dried to obtain purified iridium-cobalt nanowires. The ratio of iridium atoms to cobalt atoms was 1:2. The TEM image of the iridium-cobalt nanowire is similar to that in Figure 1, showing a narrow size distribution and distinct diffraction rings in the fast Fourier transform diffraction pattern, indicating that the nanowires have a twin crystal structure. The nanowire diameter d was 4.1±0.4 nm, and the grain size of the twin crystal constituting the nanowire was 4.5 nm.

The steps for obtaining nitrogen-doped carbon nanotubes were as follows: 1 g of carbon black and 2.5 g of urea were thoroughly ground and mixed, heated at 270 °C for 1 hour in an oxidizing atmosphere containing 15 vol% oxygen and 85 vol% helium, and then cooled to obtain nitrogen-doped carbon nanotubes.

128 mg of the iridium-cobalt nanowires were dispersed in 50 mL of ethanol, and 85 mg of the nitrogen-doped carbon nanotubes were added. The mixture was ultrasonically treated for 22 h, and centrifuged to obtain a black precipitate. The precipitate was dried in an oven at 60 °C for 4 h to obtain a black solid powder. The solid powder was heated from room temperature to 110 °C at a heating rate of 8 °C/min under a nitrogen atmosphere and held at this temperature for 0.6 h. Then, an oxidizing atmosphere containing 20 vol% oxygen and 80 vol% nitrogen was introduced, and the temperature was further increased to 210 °C at a heating rate of 5 °C/min. The mixture was treated under the oxidizing atmosphere for 3.5 h to obtain the iridium-cobalt nanowire catalyst.

In the three-electrode system using an Ag/AgCl electrode as the reference electrode, a platinum sheet electrode as the counter electrode, and a rotating disk electrode at 1600 rpm as the working electrode in 0.5 mol·L⁻¹ sulfuric acid solution saturated with oxygen at 25 °C, the catalyst exhibited an electrochemically active surface area of 48.3 cm², a specific activity of 108.3 µA/cm², and stable operation for 44 h at a current density of 10 mA·cm⁻², at a reaction overpotential of 0.25 V.

### Example 7

2.75 g of polyvinylpyrrolidone (PVP) with a weight average molecular weight of 8000 was dissolved in 320 g of ethylene glycol. Then, 0.25 mmol of tetrairidium dodecacarbonyl, 24 mmol of benzyltriethylammonium bromide, and 1.2 mmol of potassium iodide were added, and the mixture was stirred for 0.5 h to obtain a clear solution A7. 8 mmol of nickel chloride hexahydrate (iridium source to nickel source molar ratio of 1:8, iridium source calculated as the molar number of iridium) was dissolved in 160 g of ethylene glycol to obtain solution B7. Solution B7 was added to solution A7 and stirred until fully mixed. This mixture was then added to an 800 mL hydrothermal reactor and reacted at 160 °C and 1.2 bar for 48 h. The resulting product was dried, centrifuged with acetone, and a black precipitate was obtained. This precipitate was ultrasonically dispersed with ethanol, centrifugally washed with acetone, and the above steps were repeated several times to obtain purified iridium-nickel nanowires. The ratio of iridium atoms to nickel atoms was 1:2.5. The TEM image of the iridium-nickel nanowire is similar to that in Figure 1, showing a narrow size distribution and distinct diffraction rings in the fast Fourier transform diffraction pattern, indicating that the nanowire exhibited a twin crystal structure. The nanowire diameter d was 4.3±0.5 nm, and the grain size of the twin crystal constituting the nanowire was 4.7 nm.

The steps for obtaining nitrogen-doped carbon nanotubes were as follows: 1 g of oxidized carbon nanotubes and 0.2 g of urea were thoroughly ground and mixed, heated at 240 °C for 1.5 h in an oxidizing atmosphere containing 5 vol% oxygen and 95 vol% helium, and then cooled to obtain nitrogen-doped carbon nanotubes.

198 mg of the iridium-nickel nanowires were dispersed in 50 mL of ethanol, and 85 mg of the nitrogen-doped carbon nanotubes were added. The mixture was ultrasonically treated for 24 h, and centrifuged to obtain a black precipitate. The precipitate was dried in an oven at 90 °C for 12 h to obtain a black solid powder. The solid powder was heated from room temperature to 90 °C at a heating rate of 7 °C/min under an argon atmosphere and held at that temperature for 0.6 h. Then, an oxidizing atmosphere containing 20 vol% oxygen and 80 vol% nitrogen was introduced, and the temperature was further increased to 200 °C at a heating rate of 4 °C/min. The mixture was treated under the oxidizing atmosphere for 1 h to obtain the iridium-nickel nanowire catalyst.

In the three-electrode system using an Ag/AgCl electrode as the reference electrode, a platinum sheet electrode as the counter electrode, and a rotating disk electrode at 1600 rpm as the working electrode in 0.5 mol·L⁻¹ sulfuric acid solution saturated with oxygen at 25 °C, the catalyst exhibited an electrochemically active surface area of 46.0 cm², a specific activity of 87.5 µA/cm², and stable operation for 42 h at a current density of 10 mA·cm⁻², at a reaction overpotential of 0.25 V.

### Example 8

3.5 g of polyvinylpyrrolidone (PVP) with a weight average molecular weight of 29,000 was dissolved in 300 g of glycerol. Then, 1 mmol of hydrated iridium chloride, 26 mmol of benzyltriethylammonium bromide, and 0.5 mmol of sodium iodide were added, and the mixture was stirred for 0.5 h to obtain a clear solution A8. 5 mmol of cobalt acetate (iridium source to cobalt source molar ratio of 1:5) was dissolved in 200 g of glycerol to obtain solution B8. Solution B8 was added to solution A8 and stirred until fully mixed. This mixture was then added to an 800 mL hydrothermal reactor and reacted at 190 °C and 1.5 bar for 24 h. The resulting product was added to acetone and centrifuged, and the resulting black precipitate was dispersed ultrasonically with ethanol, centrifugally washed with acetone. This process was repeated several times, and purified iridium-cobalt nanowires were obtained after drying. The ratio of iridium atoms to cobalt atoms was 1:1.5. The TEM image of the iridium-cobalt nanowires was similar to that in Figure 1, showing a narrow size distribution and distinct diffraction rings in the fast Fourier transform diffraction pattern, indicating that the nanowires had a twin crystal structure. The nanowire diameter d was 3.9±0.4 nm, and the grain size of the twin crystal constituting the nanowire was 3.7 nm.

The steps for obtaining nitrogen-doped graphene were as follows: 1 g of graphene oxide and 5 g of melamine were thoroughly ground and mixed, heated at 220 °C for 3 hours in an oxidizing atmosphere containing 5 vol% oxygen and 95 vol% helium, and then cooled to obtain nitrogen-doped graphene.

85 mg of the iridium-cobalt nanowires were dispersed in 50 mL of ethanol, and 85 mg of the nitrogen-doped graphene was added. The mixture was ultrasonically treated for 8 h, and centrifuged to obtain a black precipitate. The precipitate was dried in an oven at 80 °C for 8 h to obtain a black solid powder. The solid powder was heated from room temperature to 120 °C at a heating rate of 10 °C/min under a nitrogen atmosphere and held at this temperature for 0.8 h. Then, an oxidizing atmosphere containing 10 vol% oxygen and 90 vol% helium was introduced, and the temperature was further increased to 280 °C at a heating rate of 5 °C/min. The mixture was treated under the oxidizing atmosphere for 3 h to obtain the iridium-cobalt nanowire catalyst.

In the three-electrode system using an Ag/AgCl electrode as the reference electrode, a platinum sheet electrode as the counter electrode, and a rotating disk electrode at 1600 rpm as the working electrode in 0.5 mol·L⁻¹ sulfuric acid solution saturated with oxygen at 25 °C, the catalyst exhibited an electrochemically active surface area of 49.8 cm², a specific activity of 116.5 µA/cm², and stable operation for 42 h at a current density of 10 mA·cm⁻², at a reaction overpotential of 0.25 V.

### Example 9

2.5 g of polyvinylpyrrolidone (PVP) with a weight average molecular weight of 29,000 was dissolved in 350 g of ethylene glycol. Then, 1 mmol of hydrated iridium chloride, 12 mmol of tetraethylammonium bromide, and 0.5 mmol of potassium iodide were added, and the mixture was stirred for 0.5 h to obtain a clear solution A1. 0.3 mmol of cobalt chloride hexahydrate (iridium source to cobalt source molar ratio of 1:0.3) was dissolved in 125 g of ethylene glycol to obtain solution B9. Solution B9 was added to solution A1 and stirred until fully mixed. This mixture was then added to an 800 mL hydrothermal reactor and reacted at 190 °C and 1 bar for 48 h. The resulting product was added to acetone and centrifuged, and the resulting black precipitate was dispersed ultrasonically with ethanol, centrifugally washed with acetone. This process was repeated several times, and purified iridium-cobalt nanowires were obtained after drying. The ratio of iridium atoms to cobalt atoms was 1:0.1. The TEM image of the iridium-cobalt nanowires was similar to that in Figure 1, showing a narrow size distribution and distinct diffraction rings in the fast Fourier transform diffraction pattern, indicating that the nanowires have a twin crystal structure. The nanowire diameter d was 0.5±0.1 nm, and the grain size of the twin crystal constituting the nanowire was 0.4 nm.

The steps for obtaining nitrogen-doped graphene were as follows: 1 g of graphene oxide and 4 g of urea were thoroughly ground and mixed, heated at 250 °C for 2 hours in an oxidizing atmosphere containing 10 vol% oxygen and 90 vol% helium, and then cooled to obtain nitrogen-doped graphene powder.

9.5 mg of the iridium-cobalt nanowires were dispersed in 50 mL of ethanol, and 85 mg of the nitrogen-doped graphene was added. The mixture was ultrasonically treated for 12 h, and centrifuged to obtain a black precipitate. The precipitate was dried in an oven at 80 °C for 8 h to obtain a black solid powder. The solid powder was heated from room temperature to 100 °C at a heating rate of 5 °C/min under a helium atmosphere and held at this temperature for 1 h. Then, an oxidizing atmosphere containing 10 vol% oxygen and 90 vol% helium was introduced, and the temperature was further increased to 250 °C at a heating rate of 5 °C/min. The mixture was treated under the oxidizing atmosphere for 2.5 h to obtain the iridium-cobalt nanowire catalyst.

In the three-electrode system using an Ag/AgCl electrode as the reference electrode, a platinum sheet electrode as the counter electrode, and a rotating disk electrode at 1600 rpm as the working electrode in 0.5 mol·L⁻¹ sulfuric acid solution saturated with oxygen at 25 °C, the catalyst exhibited an electrochemically active surface area of 77.9 cm², a specific activity of 71.7 µA/cm², and stable operation for 35 h at a current density of 10 mA·cm⁻² at a reaction overpotential of 0.25 V.

### Example 10

2.5 g of polyvinylpyrrolidone (PVP) with a weight average molecular weight of 29,000 was dissolved in 350 g of ethylene glycol. Then, 1 mmol of hydrated iridium chloride, 12 mmol of tetraethylammonium bromide, and 0.5 mmol of potassium iodide were added, and the mixture was stirred for 0.5 h to obtain a clear solution A1. 15 mmol of cobalt chloride hexahydrate (iridium source to cobalt source molar ratio of 1:15) was dissolved in 125 g of ethylene glycol to obtain solution B10. Solution B10 was added to solution A1 and stirred until fully mixed. This mixture was then added to an 800 mL hydrothermal reactor and reacted at 190 °C and 1 bar for 48 h. The resulting product was added to acetone and centrifuged, and the resulting black precipitate was dispersed ultrasonically with ethanol, centrifugally washed with acetone, and the above steps were repeated several times. The purified iridium-cobalt nanowires were obtained by drying. The ratio of iridium atoms to cobalt atoms was 1:5. The TEM image of the iridium-cobalt nanowires was similar to that in Figure 1, showing a narrow size distribution and distinct diffraction rings in the fast Fourier transform diffraction pattern, indicating that the nanowires exhibit a twin crystal structure. The nanowire diameter d was 5.0±0.7 nm, and the grain size of the twin crystal constituting the nanowire was 4.4 nm.

The steps for obtaining nitrogen-doped graphene were as follows: 1 g of graphene oxide and 4 g of urea were thoroughly ground and mixed, heated at 250 °C for 2 hours in an oxidizing atmosphere containing 10 vol% oxygen and 90 vol% helium, and then cooled to obtain nitrogen-doped graphene powder.

1.6 mg of the iridium-cobalt nanowires were dispersed in 50 mL of ethanol, and 85 mg of the nitrogen-doped graphene was added. The mixture was ultrasonically treated for 12 h, and centrifuged to obtain a black precipitate. The precipitate was dried in an oven at 80 °C for 8 h to obtain a black solid powder. The solid powder was heated from room temperature to 100 °C at a heating rate of 5 °C/min under a helium atmosphere and held at this temperature for 1 h. Then, an oxidizing atmosphere containing 10 vol% oxygen and 90 vol% helium was introduced, and the temperature was further increased to 250 °C at a heating rate of 5 °C/min. The mixture was treated under the oxidizing atmosphere for 2.5 h to obtain the iridium-cobalt nanowire catalyst.

In the three-electrode system using an Ag/AgCl electrode as the reference electrode, a platinum sheet electrode as the counter electrode, and a rotating disk electrode at 1600 rpm as the working electrode in 0.5 mol·L⁻¹ sulfuric acid solution saturated with oxygen at 25 °C, the catalyst exhibited an electrochemically active surface area of 36.2 cm², a specific activity of 57.2 µA/cm², and stable operation for 27 h at a current density of 10 mA·cm⁻², at a reaction overpotential of 0.25 V.

### Example 11

2.5 g of polyvinylpyrrolidone (PVP) with a weight average molecular weight of 29,000 was dissolved in 350 g of ethylene glycol. Then, 1 mmol of hydrated iridium chloride, 12 mmol of tetraethylammonium bromide, and 0.5 mmol of potassium iodide were added, and the mixture was stirred for 0.5 h to obtain a clear solution A1. 2 mmol of cobalt chloride hexahydrate (iridium source to nickel source molar ratio of 1:2) was dissolved in 125 g of ethylene glycol to obtain solution B1. Solution B1 was added to solution A1 and stirred until fully mixed. This mixture was then added to an 800 mL hydrothermal reactor and reacted at 190 °C and 1 bar for 48 h. The resulting product was added to acetone and centrifuged, and the resulting black precipitate was dispersed ultrasonically with ethanol. The precipitate was then centrifugally washed with acetone. This process was repeated several times, and purified iridium-cobalt nanowires were obtained after drying. The ratio of iridium atoms to cobalt atoms was 1:0.6. The nanowire diameter d was 3.5±0.3 nm, and the grain size of the twin crystal constituting the nanowires was 3.4 nm.

The iridium-based nanowires were heated from room temperature to 100 °C at a heating rate of 5 °C/min under a helium atmosphere and held at this temperature for 1 hour. Then, an oxidizing atmosphere containing 10 vol% oxygen and 90 vol% helium was introduced, and the temperature was further increased to 250°C at a heating rate of 5 °C/min, and the mixture was treated under the oxidizing atmosphere for 2.5 hours to obtain temperature-programmed annealing treated iridium-cobalt nanowires.

The iridium-cobalt nanowires were tested for surface composition by XPS. Before temperature-programmed annealing, iridium atoms accounted for 57% of the total metal atoms on the surface, and the proportion of oxidized iridium on the surface was 36%. After temperature-programmed annealing and before supporting, iridium atoms accounted for 64% of the total metal atoms on the surface, and the proportion of iridium in the oxidized state was 53% on the surface. After supporting, iridium atoms accounted for 64% of the total metal atoms on the surface, and the proportion of iridium in the oxidized state was 53% on the surface.

In the three-electrode system using an Ag/AgCl electrode as the reference electrode, a platinum sheet electrode as the counter electrode, and a rotating disk electrode at 1600 rpm as the working electrode in 0.5 mol·L⁻¹ sulfuric acid solution saturated with oxygen at 25 °C, the catalyst without temperature-programmed annealing exhibited an electrochemically active surface area of 40.8 cm², a specific activity of 65.5 µA/cm², and stable operation for 15 h at a current density of 10 mA·cm⁻², at a reaction overpotential of 0.25 V. After temperature-programmed annealing, the catalyst exhibited an electrochemically active surface area of 53.2 cm², a specific activity of 117.5 µA/cm², and stable operation for 30 h at a current density of 10 mA·cm⁻².

### Example 12

2.5 g of polyvinylpyrrolidone (PVP) with a weight average molecular weight of 29,000 was dissolved in 350 g of ethylene glycol. Then, 1 mmol of iridium chloride hydrate and 0.5 mmol of potassium iodide were added, and the mixture was stirred for 0.5 h to obtain a clear solution C1. 2 mmol of cobalt chloride hexahydrate (iridium source to cobalt source molar ratio of 1:2) was dissolved in 125 g of ethylene glycol to obtain solution B1. Solution B1 was added to solution C1 and stirred until fully mixed. This mixture was then added to an 800 mL hydrothermal reactor and reacted at 190 °C and 1 bar for 48 h. The resulting product was added to acetone and centrifuged, and the resulting black precipitate was dispersed ultrasonically with ethanol. The precipitate was then centrifugally washed with acetone. This process was repeated several times, and purified iridium-cobalt nanowires were obtained after drying. The ratio of iridium atoms to cobalt atoms was 1:0.6. The TEM image of the iridium-cobalt nanowires was similar to that in Figure 1, showing a narrow size distribution and distinct diffraction rings in the fast Fourier transform diffraction pattern, indicating that the nanowires have a twin crystal structure. The nanowire diameter d was 4.9±0.6 nm, and the grain size of the twin crystal constituting the nanowire was 4.1 nm.

The steps for obtaining nitrogen-doped graphene were as follows: 1 g of graphene oxide and 4 g of urea were thoroughly ground and mixed, heated at 250 °C for 2 hours in an oxidizing atmosphere containing 10 vol% oxygen and 90 vol% helium, and then cooled to obtain nitrogen-doped graphene powder.

46 mg of the iridium-cobalt nanowires were dispersed in 50 mL of ethanol, and 85 mg of the nitrogen-doped graphene was added. The mixture was ultrasonically treated for 12 h, and centrifuged to obtain a black precipitate. The precipitate was dried in an oven at 80 °C for 8 h to obtain a black solid powder. The solid powder was heated from room temperature to 100 °C at a heating rate of 5 °C/min under a helium atmosphere and held at this temperature for 1 h. Then, an oxidizing atmosphere containing 10 vol% oxygen and 90 vol% helium was introduced, and the temperature was further increased to 250 °C at a heating rate of 5 °C/min. The mixture was treated under the oxidizing atmosphere for 2.5 h to obtain the iridium-cobalt nanowire catalyst.

In the three-electrode system using an Ag/AgCl electrode as the reference electrode, a platinum sheet electrode as the counter electrode, and a rotating disk electrode at 1600 rpm as the working electrode in 0.5 mol·L⁻¹ sulfuric acid solution saturated with oxygen at 25 °C, the catalyst exhibited an electrochemically active surface area of 37.7 cm², a specific activity of 74.9 µA/cm², and stable operation for 16 h at a current density of 10 mA·cm⁻², at a reaction overpotential of 0.25 V.

### Example 13

2.5 g of polyvinylpyrrolidone (PVP) with a weight average molecular weight of 29,000 was dissolved in 350 g of ethylene glycol. Then, 1 mmol of hydrated iridium chloride, 12 mmol of tetraethylammonium bromide, and 0.5 mmol of potassium iodide were added, and the mixture was stirred for 0.5 h to obtain a clear solution A1. 2 mmol of cobalt chloride hexahydrate (iridium source to cobalt source molar ratio of 1:2) was dissolved in 125 g of ethylene glycol to obtain solution B1. Solution B1 was added to solution A1 and stirred until fully mixed. This mixture was then added to an 800 mL hydrothermal reactor and reacted at 190 °C and 1 bar for 48 h. The resulting product was added to acetone and centrifuged, and the resulting black precipitate was dispersed ultrasonically with ethanol. The precipitate was then centrifugally washed with acetone. This process was repeated several times, and purified iridium-cobalt nanowires were obtained after drying. The ratio of iridium atoms to cobalt atoms was 1:0.6. The TEM image of the iridium-cobalt nanowires was similar to that in Figure 1, showing a narrow size distribution and distinct diffraction rings in the fast Fourier transform diffraction pattern, indicating that the nanowires have a twin crystal structure. The nanowire diameter d was 3.5±0.3 nm, and the grain size of the twin crystal constituting the nanowire was 3.4 nm.

46 mg of the iridium-cobalt nanowires were dispersed in 50 mL of ethanol, and 85 mg of graphene were added. The mixture was ultrasonically treated for 12 h, and centrifuged to obtain a black precipitate. The precipitate was dried in an oven at 80 °C for 8 h to obtain a black solid powder. The solid powder was heated from room temperature to 100 °C at a heating rate of 5 °C/min under a helium atmosphere and held at this temperature for 1 h. Then, an oxidizing atmosphere containing 10 vol% oxygen and 90 vol% helium was introduced, and the temperature was further increased to 250 °C at a heating rate of 5 °C/min. The mixture was treated under the oxidizing atmosphere for 2.5 h to obtain the iridium-cobalt nanowire catalyst.

In the three-electrode system using an Ag/AgCl electrode as the reference electrode, a platinum sheet electrode as the counter electrode, and a rotating disk electrode at 1600 rpm as the working electrode in 0.5 mol·L⁻¹ sulfuric acid solution saturated with oxygen at 25 °C, the catalyst exhibited an electrochemically active surface area of 53.6 cm², a specific activity of 48.4 µA/cm², and stable operation for 18 h at a current density of 10 mA·cm⁻², at a reaction overpotential of 0.25 V.

### Example 14

2.5 g of polyvinylpyrrolidone (PVP) with a weight average molecular weight of 29000, 1 mmol of hydrated iridium chloride, 2 mmol of cobalt chloride hexahydrate (iridium source to cobalt source molar ratio of 1:2), 12 mmol of tetraethylammonium bromide, and 0.5 mmol of potassium iodide were added to 475 g of ethylene glycol and stirred for 0.5 h to obtain a clear solution. This solution was then added to an 800 mL hydrothermal reactor and reacted at 190 °C and 1 bar for 48 h. The resulting product was added to acetone and centrifuged, and the resulting black precipitate was dispersed ultrasonically with ethanol, centrifugally washed with acetone. This process was repeated several times. Purified iridium-cobalt nanowires were obtained after drying. The ratio of iridium atoms to cobalt atoms was 1:0.6. The nanowire diameter d was 3.6±0.3 nm, and the grain size of the twin crystal constituting the nanowires was 3.3 nm.

The steps for obtaining nitrogen-doped graphene were as follows: 1 g of graphene oxide and 4 g of urea were thoroughly ground and mixed, heated at 250 °C for 2 hours in an oxidizing atmosphere containing 10 vol% oxygen and 90 vol% helium, and then cooled to obtain nitrogen-doped graphene powder.

46 mg of the iridium-cobalt nanowires were dispersed in 50 mL of ethanol, and 85 mg of the nitrogen-doped graphene was added. The mixture was ultrasonically treated for 12 h, and centrifuged to obtain a black precipitate. The precipitate was dried in an oven at 80 °C for 8 h to obtain a black solid powder. The solid powder was heated from room temperature to 100 °C at a heating rate of 5 °C/min under a helium atmosphere and held at this temperature for 1 h. Then, an oxidizing atmosphere containing 10 vol% oxygen and 90 vol% helium was introduced, and the temperature was further increased to 250 °C at a heating rate of 5 °C/min. The mixture was treated under the oxidizing atmosphere for 2.5 h to obtain the iridium-cobalt nanowire catalyst.

In the three-electrode system using an Ag/AgCl electrode as the reference electrode, a platinum sheet electrode as the counter electrode, and a rotating disk electrode at 1600 rpm as the working electrode in 0.5 mol·L⁻¹ sulfuric acid solution saturated with oxygen at 25 °C, the catalyst exhibited an electrochemically active surface area of 46.8 cm², a specific activity of 52.1 µA/cm², and stable operation for 20 h at a current density of 10 mA·cm⁻², at a reaction overpotential of 0.25 V.

### Example 15

2.5 g of polyvinylpyrrolidone (PVP) with a weight average molecular weight of 29,000 was dissolved in 350 g of ethylene glycol, and then 1 mmol of iridium chloride hydrate was added. The mixture was stirred for 0.5 h to obtain a clear solution C5. 2 mmol of cobalt chloride hexahydrate (iridium source to cobalt source molar ratio of 1:2), 12 mmol of tetraethylammonium bromide, and 0.5 mmol of potassium iodide were dissolved in 125 g of ethylene glycol to obtain solution D1. Solution D1 was added to solution C5 and stirred until fully mixed. This mixture was then added to an 800 mL hydrothermal reactor and reacted at 190 °C and 1 bar for 48 h. The resulting product was added to acetone and centrifuged, and the resulting black precipitate was dispersed ultrasonically with ethanol, centrifugally washed with acetone. This process was repeated several times, and purified iridium-cobalt nanowires were obtained after drying. The ratio of iridium atoms to cobalt atoms was 1: 0.2. The nanowire diameter d was 0.8±0.2 nm, and the grain size of the twin crystal constituting the nanowires was 0.8 nm.

The steps for obtaining nitrogen-doped graphene were as follows: 1 g of graphene oxide and 4 g of urea were thoroughly ground and mixed, heated at 250 °C for 2 hours in an oxidizing atmosphere containing 10 vol% oxygen and 90 vol% helium, and then cooled to obtain nitrogen-doped graphene powder.

46 mg of the iridium-cobalt nanowires were dispersed in 50 mL of ethanol, and 85 mg of the nitrogen-doped graphene was added. The mixture was ultrasonically treated for 12 h, and centrifuged to obtain a black precipitate. The precipitate was dried in an oven at 80 °C for 8 h to obtain a black solid powder. The solid powder was heated from room temperature to 100 °C at a heating rate of 5 °C/min under a helium atmosphere and held at this temperature for 1 h. Then, an oxidizing atmosphere containing 10 vol% oxygen and 90 vol% helium was introduced, and the temperature was further increased to 250 °C at a heating rate of 5 °C/min. The mixture was treated under the oxidizing atmosphere for 2.5 h to obtain the iridium-cobalt nanowire catalyst.

In the three-electrode system using an Ag/AgCl electrode as the reference electrode, a platinum sheet electrode as the counter electrode, and a rotating disk electrode at 1600 rpm as the working electrode in 0.5 mol·L⁻¹ sulfuric acid solution saturated with oxygen at 25 °C, the catalyst exhibited an electrochemically active surface area of 63.2 cm², a specific activity of 40.9 µA/cm², and stable operation for 18 h at a current density of 10 mA·cm⁻², at a reaction overpotential of 0.25 V.

### Example 16

2.5 g of polyvinylpyrrolidone (PVP) with a weight average molecular weight of 29,000 was dissolved in 350 g of ethylene glycol. Then, 1 mmol of hydrated iridium chloride, 12 mmol of tetraethylammonium bromide, and 0.5 mmol of potassium iodide were added, and the mixture was stirred for 0.5 h to obtain a clear solution A1. 2 mmol of cobalt chloride hexahydrate (iridium source to cobalt source molar ratio of 1:2) was dissolved in 125 g of ethylene glycol to obtain solution B1. Solution B1 was added to solution A1 and stirred until fully mixed. This mixture was then transferred to an 800 mL hydrothermal reactor and reacted at 190 °C and 1 bar for 48 h. The resulting product was added to acetone and centrifuged, and the resulting black precipitate was dispersed ultrasonically with ethanol. The precipitate was then centrifugally washed with acetone. This process was repeated several times, and purified iridium-cobalt nanowires were obtained by drying. The nanowire diameter d was 3.5±0.3 nm, and the grain size of the twin crystal constituting the nanowires was 3.4 nm.

The steps for obtaining nitrogen-doped graphene were as follows: 1 g of graphene oxide and 4 g of urea were thoroughly ground and mixed, heated at 250 °C for 2 hours in an oxidizing atmosphere containing 10 vol% oxygen and 90 vol% helium, and then cooled to obtain nitrogen-doped graphene powder.

46 mg of the iridium-cobalt nanowires were dispersed in 50 mL of ethanol, and 85 mg of the nitrogen-doped graphene was added. The mixture was ultrasonically treated for 12 h, centrifuged to obtain a black precipitate. The precipitate was dried in an oven at 80 °C for 8 h to obtain a black solid powder. The solid powder was then heated from room temperature to 250 °C at a heating rate of 5 °C/min in an oxidizing atmosphere containing 10 vol% oxygen and 90 vol% helium, and treated for 2.5 h in the oxidizing atmosphere to obtain the iridium-cobalt nanowire catalyst.

In the three-electrode system using an Ag/AgCl electrode as the reference electrode, a platinum sheet electrode as the counter electrode, and a rotating disk electrode at 1600 rpm as the working electrode in 0.5 mol·L⁻¹ sulfuric acid solution saturated with oxygen at 25 °C, the catalyst exhibited an electrochemically active surface area of 57.5 cm², a specific activity of 37 µA/cm², and stable operation for 17 h at a current density of 10 mA·cm⁻², at a reaction overpotential of 0.25 V.

### Comparative Example 1

A commercially available iridium-carbon catalyst with a 40% loading exhibited an electrochemically active surface area of 28.6 cm², a specific activity of 36.6 µA/cm², and stable operation for 13 h at a current density of 10 mA·cm⁻² in the three-electrode system in 0.5 mol·L⁻¹ sulfuric acid solution saturated with oxygen at 25 °C and at a reaction overpotential of 0.25 V.

8 mg of the commercially available iridium-carbon catalyst was ultrasonically dispersed in a mixed solvent consisting of 2.6 mL isopropanol, 1.2 mL ethanol, and 0.2 mL water until uniformly dispersed. This dispersion was then uniformly sprayed onto the hydrophilic side of a 4 cm² SGL 28BC carbon paper using a spray gun, with a metal loading of 2 mg/cm², serving as the anode gas diffusion electrode (GDE) for the carbon dioxide electrolysis. The carbon dioxide electrolysis cathode GDE was the same as in Example 1. The electrolysis voltage in the MEA electrolytic cell under constant current mode was 3.3 V.

### Comparative Example 2

2.5 g of polyvinylpyrrolidone (PVP) with a weight average molecular weight of 29,000 was dissolved in 350 g of ethylene glycol. Then, 1 mmol of iridium chloride hydrate and 12 mmol of tetraethylammonium bromide were added, and the mixture was stirred for 0.5 h to obtain a clear solution C2. 2 mmol of cobalt chloride hexahydrate (iridium source to cobalt source molar ratio of 1:2) was dissolved in 125 g of ethylene glycol to obtain solution B1. Solution B1 was added to solution C2 and stirred until fully mixed. This mixture was then added to an 800 mL hydrothermal reactor and reacted at 190 °C and 1 bar for 48 h. The resulting product was added to acetone and centrifuged, and the resulting black precipitate was dispersed ultrasonically with ethanol. The precipitate was then centrifugally washed with acetone. This process was repeated several times, and purified iridium-cobalt nanocrystals were obtained by drying. The ratio of iridium atoms to cobalt atoms was 1:0.6. The TEM image of the iridium-cobalt nanocrystals was shown in Figure 6; no formation of twin crystal was observed. The nanocrystal diameter d was 3.5±0.2 nm.

The steps for obtaining nitrogen-doped graphene were as follows: 1g of graphene oxide and 4g of urea were thoroughly ground and mixed, heated at 250°C for 2 hours in an oxidizing atmosphere containing 10 vol% oxygen and 90 vol% helium, and then cooled to obtain nitrogen-doped graphene powder.

46 mg of iridium-cobalt nanocrystals were dispersed in 50 mL of ethanol, and 85 mg of the nitrogen-doped graphene was added. The mixture was ultrasonically treated for 12 h, and centrifuged to obtain a black precipitate. The precipitate was dried in an oven at 80 °C for 8 h to obtain a black solid powder. The solid powder was heated from room temperature to 100 °C at a heating rate of 5 °C/min under a helium atmosphere and held at this temperature for 1 h. Then, an oxidizing atmosphere containing 10 vol% oxygen and 90 vol% helium was introduced, and the temperature was further increased to 250 °C at a heating rate of 5 °C/min. The mixture was treated under the oxidizing atmosphere for 2.5 h to obtain the iridium-cobalt nanocrystal catalyst.

In the three-electrode system using an Ag/AgCl electrode as the reference electrode, a platinum sheet electrode as the counter electrode, and a rotating disk electrode at 1600 rpm as the working electrode in 0.5 mol·L⁻¹ sulfuric acid solution saturated with oxygen at 25 °C, the catalyst exhibited an electrochemically active surface area of 53.5 cm², a specific activity of 47.8 µA/cm², and stable operation for 27 h at a current density of 10 mA·cm⁻², at a reaction overpotential of 0.25 V.

### Comparative Example 3

1 mmol of hydrated iridium chloride, 12 mmol of tetraethylammonium bromide, and 0.5 mmol of potassium iodide were added to 475 g of ethylene glycol and stirred for 0.5 h to obtain a clear solution C3. 2 mmol of cobalt chloride hexahydrate (iridium source to cobalt source molar ratio of 1:2) was dissolved in 125 g of ethylene glycol to obtain solution B1. Solution B1 was added to solution C3 and stirred until fully mixed. This mixture was then added to an 800 mL hydrothermal reactor and reacted at 190 °C and 1 bar for 48 h. The resulting product was added to acetone and centrifuged, and the resulting black precipitate was dispersed ultrasonically with ethanol, centrifugally washed with acetone, and the above steps were repeated several times. Purified iridium-cobalt nanocrystals were obtained by drying. The ratio of iridium atoms to cobalt atoms was 1:0.3. The diameter d of the iridium-cobalt nanocrystals was 243±57 nm.

The steps for obtaining nitrogen-doped graphene were as follows: 1 g of graphene oxide and 4 g of urea were thoroughly ground and mixed, heated at 250 °C for 2 hours in an oxidizing atmosphere containing 10 vol% oxygen and 90 vol% helium, and then cooled to obtain nitrogen-doped graphene powder.

46 mg of the iridium-cobalt nanocrystals were dispersed in 50 mL of ethanol, and 85 mg of the nitrogen-doped graphene was added. The mixture was ultrasonically treated for 12 h, and centrifuged to obtain a black precipitate. The precipitate was dried in an oven at 80 °C for 8 h to obtain a black solid powder. The solid powder was heated from room temperature to 100 °C at a heating rate of 5 °C/min under a helium atmosphere and held at this temperature for 1 h. Then, an oxidizing atmosphere containing 10 vol% oxygen and 90 vol% helium was introduced, and the temperature was further increased to 250 °C at a heating rate of 5 °C/min. The mixture was treated under the oxidizing atmosphere for 2.5 h to obtain the iridium-cobalt nanocrystal catalyst.

In the three-electrode system using an Ag/AgCl electrode as the reference electrode, a platinum sheet electrode as the counter electrode, and a rotating disk electrode at 1600 rpm as the working electrode in 0.5 mol·L⁻¹ sulfuric acid solution saturated with oxygen at 25 °C, the catalyst exhibited an electrochemically active surface area of 5.9 cm², a specific activity of 12.5 µA/cm², and stable operation for 12 h at a current density of 10 mA·cm⁻², at a reaction overpotential of 0.25 V.

### Comparative Example 4

2.5 g of polyvinylpyrrolidone (PVP) with a weight average molecular weight of 29,000 was dissolved in 475 g of ethylene glycol. Then, 1 mmol of hydrated iridium chloride, 12 mmol of tetraethylammonium bromide, and 0.5 mmol of potassium iodide were added. The mixture was stirred for 0.5 h to obtain a clear solution C4, which was then added to an 800 mL hydrothermal reactor and reacted at 190 °C and 1 bar for 48 h. The resulting product was added to acetone and centrifuged, and the resulting black precipitate was dispersed ultrasonically with ethanol. The precipitate was then centrifugally washed with acetone. This process was repeated several times, and purified iridium nanowires were obtained after drying. The TEM image of the iridium nanowires was similar to that in Figure 1, showing a narrow size distribution and a twin crystal structure. The nanowire diameter d was 2.7±0.3 nm, and the grain size of the twin crystal constituting the nanowire was 2.6 nm.

The steps for obtaining nitrogen-doped graphene were as follows: 1 g of graphene oxide and 4 g of urea were thoroughly ground and mixed, heated at 250 °C for 2 hours in an oxidizing atmosphere containing 10 vol% oxygen and 90 vol% helium, and then cooled to obtain nitrogen-doped graphene powder.

46 mg of the iridium nanowires were dispersed in 50 mL of ethanol, and 85 mg of the nitrogen-doped graphene was added. The mixture was ultrasonically treated for 12 h, and centrifuged to obtain a black precipitate. The precipitate was dried in an oven at 80 °C for 8 h to obtain a black solid powder. The solid powder was heated from room temperature to 100 °C at a heating rate of 5 °C/min under a helium atmosphere and held at this temperature for 1 h. Then, an oxidizing atmosphere containing 10 vol% oxygen and 90 vol% helium was introduced, and the temperature was further increased to 250 °C at a heating rate of 5 °C/min. The mixture was treated under the oxidizing atmosphere for 2.5 h to obtain the iridium nanowire catalyst.

In the three-electrode system using an Ag/AgCl electrode as the reference electrode, a platinum sheet electrode as the counter electrode, and a rotating disk electrode at 1600 rpm as the working electrode in 0.5 mol·L⁻¹ sulfuric acid solution saturated with oxygen at 25 °C, the catalyst exhibited an electrochemically active surface area of 58.3 cm², a specific activity of 45.1 µA/cm², and stable operation for 22 h at a current density of 10 mA·cm⁻², at a reaction overpotential of 0.25 V.

### Comparative Example 5

2.5 g of polyvinylpyrrolidone (PVP) with a weight average molecular weight of 29,000 was dissolved in 350 g of ethylene glycol. Then, 1 mmol of hydrated iridium chloride, 12 mmol of hexadecyltrimethylammonium bromide, and 0.5 mmol of potassium iodide were added, and the mixture was stirred for 0.5 h to obtain a clear solution C6. 2 mmol of cobalt chloride hexahydrate (iridium source to cobalt source molar ratio of 1:2) was dissolved in 125 g of ethylene glycol to obtain solution B1. Solution B1 was added to solution C6 and stirred until fully mixed. This mixture was then transferred to an 800 mL hydrothermal reactor and reacted at 190 °C and 1 bar for 48 h. The resulting product was added to acetone and centrifuged, and the resulting black precipitate was dispersed ultrasonically with ethanol. The precipitate was then centrifugally washed with acetone. This process was repeated several times, and purified iridium-cobalt nanocrystals were obtained by drying. The ratio of iridium atoms to cobalt atoms was 1:0.5. The nanocrystal diameter d was 152±34 nm.

The steps for obtaining nitrogen-doped graphene were as follows: 1 g of graphene oxide and 4 g of urea were thoroughly ground and mixed, heated at 250 °C for 2 hours in an oxidizing atmosphere containing 10 vol% oxygen and 90 vol% helium, and then cooled to obtain nitrogen-doped graphene powder.

46 mg of the iridium-cobalt nanocrystals were dispersed in 50 mL of ethanol, and 85 mg of the nitrogen-doped graphene was added. The mixture was ultrasonically treated for 12 h, and centrifuged to obtain a black precipitate. The precipitate was dried in an oven at 80 °C for 8 h to obtain a black solid powder. The solid powder was heated from room temperature to 100 °C at a heating rate of 5 °C/min under a helium atmosphere and held at this temperature for 1 h. Then, an oxidizing atmosphere containing 10 vol% oxygen and 90 vol% helium was introduced, and the temperature was further increased to 250 °C at a heating rate of 5 °C/min. The mixture was treated under the oxidizing atmosphere for 2.5 h to obtain the iridium-cobalt nanocrystal catalyst.

In the three-electrode system using an Ag/AgCl electrode as the reference electrode, a platinum sheet electrode as the counter electrode, and a rotating disk electrode at 1600 rpm as the working electrode in 0.5 mol·L⁻¹ sulfuric acid solution saturated with oxygen at 25 °C, the catalyst exhibited an electrochemically active surface area of 16.2 cm², a specific activity of 21.7 µA/cm², and stable operation for 15 h at a current density of 10 mA·cm⁻², at a reaction overpotential of 0.25 V.

### Comparative Example 6

2.5 g of polyvinylpyrrolidone (PVP) with a weight average molecular weight of 360,000 was dissolved in 350 g of ethylene glycol. Then, 1 mmol of hydrated iridium chloride, 12 mmol of tetraethylammonium bromide, and 0.5 mmol of potassium iodide were added, and the mixture was stirred for 0.5 h to obtain a clear solution C7. 2 mmol of cobalt chloride hexahydrate (iridium source to cobalt source molar ratio of 1:2) was dissolved in 125 g of ethylene glycol to obtain solution B1. Solution B1 was added to solution C7 and stirred until fully mixed. This mixture was then transferred to an 800 mL hydrothermal reactor and reacted at 190 °C and 1 bar for 48 h. The resulting product was added to acetone and centrifuged, and the resulting black precipitate was dispersed ultrasonically with ethanol, centrifugally washed with acetone, and the above steps were repeated several times. Purified iridium-cobalt nanocrystals were obtained by drying. The nanocrystal diameter d was 0.5 nm.

The steps for obtaining nitrogen-doped graphene were as follows: 1 g of graphene oxide and 4 g of urea were thoroughly ground and mixed, heated at 250 °C for 2 hours in an oxidizing atmosphere containing 10 vol% oxygen and 90 vol% helium, and then cooled to obtain nitrogen-doped graphene powder.

46 mg of the iridium-cobalt nanocrystals were dispersed in 50 mL of ethanol, and 85 mg of the nitrogen-doped graphene was added. The mixture was ultrasonically treated for 12 h, centrifuged to obtain a black precipitate, and dried in an oven at 80 °C for 8 h to obtain a black solid powder. The solid powder was heated from room temperature to 250 °C at a heating rate of 5 °C/min in an oxidizing atmosphere containing 10 vol% oxygen and 90 vol% helium and treated in the oxidizing atmosphere for 2.5 h to obtain an iridium-cobalt nanocrystal catalyst.

In the three-electrode system using an Ag/AgCl electrode as the reference electrode, a platinum sheet electrode as the counter electrode, and a rotating disk electrode at 1600 rpm as the working electrode in 0.5 mol·L⁻¹ sulfuric acid solution saturated with oxygen at 25 °C, the catalyst exhibited an electrochemically active surface area of 23.7 cm², a specific activity of 5.5 µA/cm², and stable operation for 10 h at a current density of 10 mA·cm⁻², at a reaction overpotential of 0.25 V.

**Table 1. Physicochemical properties and catalytic performance of each Example and Comparative Example**

| | Electrochemical active surface area/cm² | Catalyst specific activity/µA cm⁻² | Stable operation at a current density of 10 mA·cm⁻²/h |
|---|---|---|---|
| Example 1 | 54.4 | 113.0 | 32 |
| Example 2 | 51.4 | 125.4 | 25 |
| Example 3 | 67.1 | 97.1 | 29 |
| Example 4 | 60.5 | 102.9 | 37 |
| Example 5 | 42.7 | 109.6 | 41 |
| Example 6 | 48.3 | 108.3 | 44 |
| Example 7 | 46.0 | 87.5 | 42 |
| Example 8 | 49.8 | 116.5 | 42 |
| Example 9 | 77.9 | 71.7 | 35 |
| Example 10 | 36.2 | 57.2 | 27 |
| Example 11 | 53.2 | 117.5 | 30 |
| Example 12 | 37.7 | 74.9 | 16 |
| Example 13 | 53.6 | 48.4 | 18 |
| Example 14 | 46.8 | 52.1 | 20 |
| Example 15 | 63.2 | 40.9 | 18 |
| Example 16 | 57.5 | 37.0 | 17 |
| Comparative Example 1 | 28.6 | 36.6 | 13 |
| Comparative Example 2 | 53.5 | 47.8 | 27 |
| Comparative Example 3 | 5.9 | 12.5 | 12 |
| Comparative Example 4 | 58.3 | 45.1 | 22 |
| Comparative Example 5 | 16.2 | 21.7 | 15 |
| Comparative Example 6 | 23.7 | 5.5 | 10 |

The examples described above are only used for explaining the present invention and do not constitute any limitation on the present invention. The present invention has been described with reference to typical examples, but it should be understood that the terms used herein are descriptive and explanatory, not limiting. Modifications can be made to the present invention within the scope of the claims, and revisions can be made to the present invention without departing from its scope and spirit. Although the present invention described herein relates to specific methods, materials, and examples, it does not mean that the present invention is limited to the specific examples disclosed herein; on the contrary, the present invention can be extended to all other methods and applications having the same function.

## Claims

1. An iridium-based nanowire comprising a twin crystal composed of iridium and at least one transition metal selected from iron, cobalt and nickel, preferably, the diameter d of the nanowire is 0.5 to 6 nm, and more preferably, the grain size of the twin crystal is (0.8-1.1)·d nm.

2. The iridium-based nanowire according to claim 1, wherein the atomic ratio of iridium to the transition metal is 1:(0.1-5), preferably 1:(0.2-3);
and/or the shape of the iridium-based nanowire is selected from at least one of dendritic, linear, and netlike shapes.

3. The iridium-based nanowire according to claim 1, wherein the percentage concentration of iridium on the surface of the iridium-based nanowire is at least 1% higher than the percentage concentration of iridium in the overall iridium-based nanowire, preferably at least 2% higher, and more preferably at least 5% higher;
and/or, the iridium in the oxidized state on the surface of the iridium-based nanowire accounts for at least 20%, preferably at least 30%, and more preferably at least 40%.

4. A preparation method of the iridium-based nanowire according to any one of claims 1-3, comprising the following steps:
A1. a capping agent, an iridium source, and a crystal facet coordination agent are dissolved in a first alcohol to obtain an iridium source solution;
A2. a transition metal source is dissolved in a second alcohol to obtain a transition metal source solution;
A3. the solution from step A1 is mixed with the solution from step A2 to obtain a mixture;
A4. the mixture from step A3 undergoes reaction under heating conditions to obtain iridium-based nanowires;
wherein the crystal facet coordination agent comprises an inorganic iodide; and
wherein the capping agent is polyvinylpyrrolidone with a weight average molecular weight of 8,000 to 60,000.

5. The preparation method according to claim 4, having one or more of the following features:
the iridium source is selected from soluble iridium salts, preferably from at least one of iridium chloride, iridium acetylacetonate, iridium carbonyl, hexachloroiridic acid, sodium hexachloroiridate, ammonium hexachloroiridate, and tetrairidium dodecacarbonyl;
the transition metal source is selected from soluble salts of iron, cobalt, and nickel, and preferably selected from at least one of chlorides, bromides, nitrates, sulfates, carbonates, acetates, and acetylacetone salts of iron, cobalt, and nickel;
the first alcohol and the second alcohol are the same or different, and are, independently from each other, selected from polyols, preferably C2 - C5 polyols, more preferably, the polyol is selected from at least one of ethylene glycol, 1,2-propanediol, 1,3-propanediol, glycerol, diethylene glycol, triethylene glycol, dipropylene glycol, etc.;
the inorganic iodide is selected from at least one of alkali metal iodides, such as lithium iodide, sodium iodide, and potassium iodide, and ammonium iodide, etc.;
the crystal facet coordination agent is a mixture of the inorganic iodide and a quaternary ammonium bromide with a relative molecular weight of less than 360, and
the quaternary ammonium bromide is selected from compounds with general formula of R4NBr, wherein R, independently from each other, represents C1-C4 alkyl, aryl, or C1-C4 alkyl-substituted aryl, preferably selected from at least one of tetramethylammonium bromide, tetraethylammonium bromide, tetrapropylammonium bromide, tetrabutylammonium bromide, benzyltrimethylammonium bromide, and benzyltriethylammonium bromide.

6. The preparation method according to claim 4 or 5, **characterized in that**, the molar ratio of the iridium source, the transition metal source, and the crystal facet coordination agent is 1:(0.5-15):(5.1-32), preferably 1:(0.5-10):(5.1-32).

7. The preparation method according to any one of claims 4-6, **characterized in that**, the molar ratio of the iridium source, the quaternary ammonium bromide in the crystal facet coordination agent and the inorganic iodide in the crystal facet coordination agent is 1:(5-30):(0.1-1.2), preferably 1:(8-20):(0.3-1), more preferably 1:(12-20):(0.3-1), and even more preferably 1:(12-20):(0.5-0.9).

8. The preparation method according to any one of claims 4-7, **characterized in that** the mass ratio of the iridium source, the capping agent and the alcohol is 1:(8-12):(1000-2000), preferably 1: (8-10):(1000-2000), preferably 1:(8-10):(1500-1800), and preferably 1:(8-10):(1700-1800).

9. The preparation method according to any one of claims 4-8, **characterized in that** the reaction temperature in step A4 is 130-230 °C; the pressure is 0.8-1.5 bar(abs); and the reaction time is 4-60 h, preferably the reaction temperature is 150-200 °C; the pressure is 1.0-1.2 bar(abs); and the reaction time is 24-48 h.

10. The preparation method according to any one of claims 4-9, **characterized in that**, the method further includes:
A5. following step A4, the iridium-based nanowires are subjected to heat treatment;
preferably, the heat treatment includes the following steps:
A5.1 under the protection of nitrogen and/or inert gas, the temperature is increased from room temperature to 80-120 °C at a heating rate of 5-10 °C/min, and held at this temperature for 0.5-1 h;
A5.2 with introducing an oxidizing atmosphere, the temperature is further increased to 200-350 °C at a heating rate of 2-5 °C/min, and the iridium-based nanowires are treated under the oxidizing atmosphere for 0.5-4 h; optionally, the oxygen content in the oxidizing atmosphere in step A5.2 is 5 vol%-20 vol%.

11. An iridium-based catalyst comprising the iridium-based nanowire according to any one of claims 1-3, **characterized in that** the iridium-based nanowires are located on a nitrogen-doped carbon material as a support.

12. The iridium-based catalyst according to claim 11, **characterized in that**, based on parts by weight, the catalyst comprises 10 to 95 parts by weight of the iridium-based nanowires as the active component and 5 to 90 parts by weight of the nitrogen-doped carbon material as the support.

13. The iridium-based catalyst according to claim 11 or 12, **characterized in that** the support for the nitrogen-doped carbon material is selected from at least one of carbon black, graphene, carbon nanotube, activated carbon, and graphite; optionally, the molar fraction of nitrogen in the nitrogen-doped carbon material is 0.5% to 5%, preferably 0.5% to 3%.

14. The iridium-based catalyst according to any one of claims 11-13, **characterized in that** the electrochemical surface area of the catalyst is 36-78 cm².

15. A preparation method of the iridium-based catalyst according to any one of claims 11-14, comprising the following steps:
B1. the iridium-based nanowires according to any one of claims 1-3 or the iridium-based nanowires obtained by the method according to any one of claims 4-10 are provided;
B2. the iridium-based nanowires are mixed with a nitrogen-doped carbon material;
B3. the mixture obtained in step B2 is heat-treated,
to obtain the iridium-based catalyst with the iridium-based nanowires as the active component and the nitrogen-doped carbon material as the support.

16. The preparation method according to claim 15, **characterized in that** it has one or more of the following features:
the carbon material in the nitrogen-doped carbon material in step B2 is at least one of carbon black, graphene, carbon nanotube, activated carbon, and graphite;
the carbon material in step B2 may undergo an oxidation pretreatment;
the nitrogen-doped carbon material in step B2 is produced by nitrogen doping a carbon support with a nitrogen source through solid-phase or liquid-phase reaction; preferably, the nitrogen source is selected from at least one of urea, biuret, ammonium nitrate, ammonium bicarbonate, and melamine; preferably, the mass ratio of the carbon support to the nitrogen source powder is 1:(0.2-5); preferably, the oxygen content in the oxidizing atmosphere is 5 vol%-20 vol%, with the remainder being at least one of nitrogen and/or an inert gas; the heating temperature is 150 to 350 °C, preferably 200 to 350 °C, and the heating time is 0.5 to 6 h, preferably 0.5 to 4 h; and
the mass ratio of the iridium-based nanowires as the active component to the nitrogen-doped carbon material as the support in step B2 is 10-95:5-90.

17. The preparation method according to claim 16, **characterized in that** the heat treatment in step B3 comprises the following steps:
B3.1 under the protection of nitrogen and/or inert gas, the temperature is increased from room temperature to 80-120 °C at a heating rate of 5-10 °C/min, and held at this temperature for 0.5-1 h;
B3.2 with introducing an oxidizing atmosphere, the temperature is further increased to 200-350 °C at a heating rate of 2-5 °C/min, and the mixture is treated under the oxidizing atmosphere for 0.5-4 h; optionally, the oxygen content in the oxidizing atmosphere in step (2) is 5 vol%-20 vol%.

18. Use of the iridium-based nanowire according to any one of claims 1-3 or the iridium-based catalyst according to any one of claims 11-14 in oxygen evolution reaction.
